# EUROPEAN PATENT SPECIFICATION

(11) **EP 4 283 955 B1**
(45) Date of publication and mention of the grant of the patent: **27.05.2026**
(21) Application number: 22752337.0
(22) Date of filing: 10.02.2022
(51) Int. Cl.: H04L 67/12, H04L 9/08, H04L 9/32, H04W 4/44, H04W 12/0431, H04L 9/40, H04L 9/14, H04W 12/069

(54) **COMMUNICATION KEY CONFIGURATION METHOD AND APPARATUS**
VERFAHREN UND VORRICHTUNG ZUR KOMMUNIKATIONSSCHLÜSSELKONFIGURATION
PROCÉDÉ ET APPAREIL DE CONFIGURATION DE CLÉ DE COMMUNICATION

(30) Priority: 10.02.2021 CN 202110184217
(43) Date of publication of application: 29.11.2023
(73) Proprietor: Shenzhen Yinwang Intelligent Technologies Co., Ltd., Shenzhen, Guangdong 518129 (CN)
(72) Inventor: GUO, Zhipeng, Shenzhen, Guangdong 518129 (CN); PAN, Kai, Shenzhen, Guangdong 518129 (CN)
(74) Representative: Thun, Clemens
(86) International application number: PCT/CN2022/075864
(87) International publication number: WO 2022/171177

(56) References cited:
- CN-A- 108 924 147
- CN-A- 109 639 427
- CN-A- 110 417 799
- CN-A- 111 200 495
- CN-A- 111 917 685
- CN-A- 112 055 330
- JP-A- 2019 161 521
- US-A1- 2018 026 949
- US-A1- 2020 195 633
- US-A1- 2020 220 737

## Description

### TECHNICAL FIELD

This application relates to the fields of Internet of Vehicles and communication technologies, and in particular, relates to a communication key configuration method and apparatus.

### BACKGROUND

As a quantity of vehicular sensors increases, functions of the vehicular sensors are enhanced, and precision of the vehicular sensors is improved, an amount of information collected by a vehicular device, such as geographical location information, a vehicle trajectory, and vehicle surrounding information, greatly increases, and sensitivity of the information is greatly improved. Therefore, a requirement for data security is increasingly higher. A cloud device needs to collect sensor data collected by a vehicle, to optimize an application like automated driving. Therefore, the vehicular device needs to upload the data to a cloud.

To ensure security of data uploading, the vehicular device needs to perform key agreement with the cloud device to obtain a key, encrypt the data, and then upload the encrypted data. However, in a key agreement process, a plurality of message exchanges are required, and a volume of communication data is large, thereby affecting performance of data uploading. In addition, security of a temporary key obtained through key agreement is related to randomness of a random number generated by both agreement parties. Once the randomness of the random number decreases, a risk of being likely to be predicted by an attacker is caused, and consequently, data security is poor.

Therefore, how to configure a key to be used by data in communication to ensure data security becomes an urgent problem to be resolved.
US 2018/026949 related to an electronic device and method for providing vehicle information.

### SUMMARY

Embodiments of this application provide a communication key configuration method and apparatus, so that a communication key can be directly allocated to a vehicle to reduce a quantity of required message exchanges, and security of allocation and transmission of the communication key can be ensured, thereby ensuring data security.

According to a first aspect, the invention provides a communication key configuration method according to claim 1.

It can be learned that, after receiving the first message from the first terminal, the certificate and key management server directly allocates the communication key to the first terminal, to avoid a problem that a key obtained through key agreement cannot ensure key strength. In addition, the certificate and key management server verifies, by using the first certificate, that the first terminal has the identity credential for requesting the communication key by using the second certificate, to ensure that the communication key is allocated to a vehicle having an identity credential. In addition, the certificate and key management server further encrypts, by using the second certificate, the communication key allocated to the vehicle, to ensure security of transmission of the communication key.

In addition, in this application, the certificate and key management server allocates the communication key to the vehicle. This also helps meet a supervision and audit requirement, compared with direct key agreement on a key between the vehicle and a cloud server.

In an optional implementation, the first certificate may be different from a device certificate, and the first certificate may be dedicated to verifying an identity credential of a vehicle that requests a key. This avoids leakage of the communication key, due to a problem that a private key corresponding to the device certificate is likely to be leaked because the device certificate is not easily updated or revoked and the first terminal directly uses the device certificate to request a key, causing an excessively large quantity of times of using the device certificate. Optionally, the first certificate may be updated more frequently than the device certificate. Even if a private key corresponding to the first certificate is leaked, a new first certificate may be applied for again, and the leaked registration certificate may be revoked, so that subsequent verification on the identity credential is not affected, thereby improving security.

In an optional implementation, the second certificate may be a certificate dedicated to distribution of the communication key. In this application, the second certificate is used to ensure confidentiality of transmission of the communication key. This can further improve update frequency of the second certificate, compared with a manner of encrypting the communication key by using the device certificate or the first certificate. Even if a second private key corresponding to the second certificate is leaked, a new second certificate may be applied for, and the leaked second certificate may be revoked, so that subsequent transmission of the communication key is not affected, thereby improving security.

In addition, one vehicle may have a plurality of first certificates, which are respectively corresponding to different services. One vehicle may also have a plurality of second certificates, which are respectively corresponding to different data of a same service. This is not limited in this application.

In an optional implementation, the first message from the first terminal further includes a first signature. In this way, that the certificate and key management server verifies, based on a first public key in the first certificate, that the first terminal has an identity credential for requesting a communication key by using the second certificate may include: The certificate and key management server verifies the first signature based on the first message and the first public key in the first certificate; and when the verification on the first signature succeeds, the certificate and key management server determines that the first terminal has the first message and a first private key corresponding to the first certificate (or the first terminal has the first private key corresponding to the first certificate, and the first message is not tampered with). The first message and the first private key are used to indicate that the first terminal has the identity credential for requesting the communication key by using the second certificate. Therefore, this helps the certificate and key management server allocate a communication key to a vehicle having an identity credential.

In an optional implementation, the second message sent by the certificate and key management server further includes a second signature. The second signature is generated by the certificate and key management server by using the ciphertext of the communication key and a private key corresponding to a certificate of the certificate and key management server, and is used to indicate that the second message is from the certificate and key management server. Therefore, this helps the first terminal verify validity of a source of the second message based on the second signature, so that the first terminal can use the communication key to transmit data.

In this application, the first certificate and the second certificate may be allocated by the certificate and key management server to the first terminal. For example, but not limited to the example, before the certificate and key management server receives the first message from the first terminal, for example, in a phase like activation of the first terminal or delivery of the first terminal to a customer, the certificate and key management server allocates the first certificate and the second certificate to the first terminal.

In an optional implementation, related operations of allocating, by the certificate and key management server, the second certificate to the first terminal may include but are not limited to the following steps: The certificate and key management server receives a third message from the first terminal, where the third message includes the first certificate and a second public key; the certificate and key management server verifies, by using the first public key in the first certificate, that the first terminal has the identity credential for requesting the communication key by using the second certificate; the certificate and key management server generates the second certificate by using the second public key from the first terminal; and the certificate and key management server sends a fourth message to the first terminal, where the fourth message includes the second certificate. It can be learned that, in this implementation, it is ensured that the second certificate can be distributed to a vehicle having a corresponding identity credential, so that the vehicle can directly request a communication key from the certificate and key management server by using the communication key configuration method in this application.

Optionally, the third message from the first terminal may be a message for requesting the second certificate, and is used to request the second certificate, to request the communication key.

Optionally, the third message from the first terminal further includes a third signature. In this way, that the certificate and key management server verifies, by using the first certificate, that the first terminal has an identity credential for requesting a communication key by using the second certificate includes: The certificate and key management server verifies the third signature based on the second public key and the first public key in the first certificate; and when the verification on the third signature succeeds, the certificate and key management server determines that the first terminal has the second public key and the first private key corresponding to the first certificate (or the first terminal has the first private key corresponding to the first certificate, and the second public key is not tampered with). The second public key and the first private key are used to indicate that the first terminal has the identity credential for requesting the communication key by using the second certificate. Therefore, this helps allocate, by using the fourth message, the second certificate to the vehicle having the corresponding identity credential.

In an optional implementation, related operations of allocating, by the certificate and key management server, the first certificate to the first terminal may include but are not limited to the following steps: The certificate and key management server receives a fifth message from the first terminal, where the fifth message includes the device certificate and the first public key; the certificate and key management server verifies, by using the device certificate, that the first terminal has an identity credential for requesting the first certificate; the certificate and key management server generates the first certificate based on the first public key from the first terminal; and the certificate and key management server sends a sixth message to the first terminal, where the sixth message includes the first certificate. It can be learned that, in this implementation, not only the first certificate can be allocated to a vehicle, but also it can be ensured that the vehicle to which the first certificate is allocated is a vehicle having a corresponding identity credential.

Optionally, the fifth message further includes a fourth signature. In this way, that the certificate and key management server verifies, by using the device certificate, that the first terminal has an identity credential for requesting the first certificate includes: The certificate and key management server verifies the fourth signature based on the first public key and a third public key in the device certificate; and when the verification on the fourth signature succeeds, the certificate and key management server determines that the first terminal has the first public key and a third private key corresponding to the device certificate, where the first public key and the third private key are used to indicate that the first terminal has the identity credential for requesting the first certificate. It can be learned that, in this implementation, it can be ensured that the vehicle to which the first certificate is allocated is a vehicle having a corresponding identity credential.

The communication key configuration method provided in this application may further include: The certificate and key management server transmits the communication key allocated to the first terminal to a cloud server through a secure channel. Therefore, this helps the cloud server decrypt, by using the communication key, data that is encrypted by using the communication key and that is uploaded by the first terminal, thereby helping the cloud server optimize an application like automated driving.

Optionally, the related operations of the communication key configuration method, the related operations of the allocation of the first certificate, and the related operations of the allocation of the second certificate include, but are not limited to, being respectively performed in three different phases. For example, in one phase, the related operations of the allocation of the first certificate may be performed; in another phase, the related operations of the allocation of the second certificate may be performed; and in still another phase, the related operations of communication key configuration may be performed. Optionally, update cycles for applying for the first certificate, the second certificate, and the communication key by the first terminal may also be different from each other. Therefore, this helps improve flexibility of triggering, by the first terminal, the related operations in each phase; and also helps improve flexibility of division of function modules in the first terminal.

According to a second aspect, the invention further provides a communication key configuration method according to claim 7.

It can be learned that, in this application, the first terminal applies for the communication key by using the first message, so that the first terminal directly receives the second message returned by the certificate and key management server, to obtain the communication key, thereby avoiding a problem that the first terminal needs to agree with a communication peer, like a cloud server, to obtain a key, and the obtained key cannot ensure key strength. In addition, on one hand, the first terminal can indicate, to the certificate and key management server by using the first certificate, that the first terminal is a vehicle having an identity credential; and on the other hand, the first terminal can uniquely learn of, by using the second private key corresponding to the second certificate, the communication key allocated by the certificate and key management server to the first terminal, thereby ensuring security of transmission of the communication key.

In addition, in this application, the first terminal may obtain the communication key from the certificate and key management server. This further helps meet a supervision and audit requirement, compared with direct key agreement on a communication key between the vehicle and the cloud server.

In an optional implementation, the first certificate may be different from a device certificate, and the first certificate may be dedicated to verifying an identity credential of a vehicle that requests a key. This avoids leakage of the communication key, due to a problem that a private key corresponding to the device certificate is likely to be leaked because the device certificate is not easily updated or revoked and the first terminal directly uses the device certificate to request a key, causing an excessively large quantity of times of using the device certificate. Optionally, the first certificate may be updated more frequently than the device certificate. Even if a private key corresponding to the first certificate is leaked, a new first certificate may be applied for again, and the leaked first certificate may be revoked, so that subsequent verification on the identity credential is not affected, thereby improving security.

In an optional implementation, the second certificate may be a certificate dedicated to distribution of the communication key. In this application, the second certificate is used to ensure confidentiality of transmission of the communication key. This can further improve update frequency of the second certificate, compared with a manner of encrypting the communication key by using the device certificate or the first certificate. Even if the second private key corresponding to the second certificate is leaked, a new second certificate may be applied for, and the leaked second certificate may be revoked, so that subsequent transmission of the communication key is not affected, thereby improving security.

In an optional implementation, the first message sent by the first terminal further includes a first signature. Before the first terminal sends the first message to the certificate and key management server, the method further includes: The first terminal generates the first signature by using the first certificate, the second certificate, and a first private key corresponding to the first certificate, where the first signature is used by the certificate and key management server to verify, with reference to the first certificate, that the first terminal has the identity credential for requesting the communication key by using the second certificate. Therefore, this helps the certificate and key management server allocate the communication key to the first terminal having the identity credential.

In an optional implementation, the second message further includes a second signature. After the first terminal receives the second message, the method further includes: The first terminal verifies the second signature by using a public key in a certificate of the certificate and key management server; and when the verification on the second signature succeeds, the first terminal determines that the second message is from the certificate and key management server. Optionally, the first terminal verifies the second signature by using the ciphertext of the communication key and the public key in the certificate of the certificate and key management server. It can be learned that this implementation helps the first terminal verify validity of a source of the second message based on the second signature, so that the first terminal can use the communication key to transmit data, thereby improving security of the communication key.

In this application, the first certificate and the second certificate may be separately applied for by the first terminal. For example, but not limited to the example, before the first terminal sends the first message, for example, in a phase like activation of the first terminal or delivery of the first terminal to a customer, the first terminal requests the first certificate and the second certificate from the certificate and key management server.

In an optional implementation, that the first terminal requests the second certificate from the certificate and key management server includes but is not limited to the following steps: The first terminal sends a third message to the certificate and key management server, where the third message includes the first certificate and a second public key; and the first terminal receives a fourth message, where the fourth message is sent after the certificate and key management server verifies, by using the first certificate, that the first terminal has the identity credential for requesting the communication key by using the second certificate, and the fourth message includes the second certificate generated by the certificate and key management server based on the second public key. It can be learned that, in this implementation, it may be indicated to the certificate and key management server that the first terminal is a vehicle having a corresponding identity credential, so that the first terminal obtains the second certificate.

Optionally, the third message further includes a third signature. Before the first terminal sends the third message to the certificate and key management server, the method further includes: The first terminal generates the third signature based on the second public key and the first private key corresponding to the first certificate, where the third signature is used by the certificate and key management server to verify, with reference to the first certificate, that the first terminal has the identity credential for requesting the communication key by using the second certificate.

In an optional implementation, that the first terminal requests the first certificate from the certificate and key management server may include but is not limited to the following related operations: The first terminal sends a fifth message to the certificate and key management server, where the fifth message includes the device certificate and a first public key; and the first terminal receives a sixth message, where the sixth message is sent after the certificate and key management server verifies, by using the device certificate, that the first terminal has an identity credential for requesting the first certificate, and the sixth message includes the first certificate generated by the certificate and key management server based on the first public key. It can be learned that, in this implementation, it may be indicated to the certificate and key management server that the first terminal is a vehicle having a corresponding identity credential, so that the first terminal obtains the first certificate.

Optionally, the fifth message further includes a fourth signature. Before the first terminal sends the fifth message to the certificate and key management server, the method further includes: The first terminal generates the fourth signature based on the first public key and a third private key corresponding to the device certificate, where the fourth signature is used by the certificate and key management server to verify, with reference to the device certificate, that the first terminal has the identity credential for requesting the first certificate.

In the communication key configuration method provided in this application, after the first terminal decrypts the ciphertext of the communication key by using the second private key corresponding to the second certificate, to obtain the communication key, the method further includes: The first terminal encrypts to-be-transmitted data by using the communication key, to obtain a ciphertext of the to-be-transmitted data; and the first terminal uploads the ciphertext of the to-be-transmitted data to the cloud server. Therefore, this helps the cloud server securely obtain the data, thereby helping the cloud server optimize an application like automated driving.

Optionally, in one manner, when uploading the ciphertext of the to-be-transmitted data to the cloud server, the first terminal may further upload both a key identifier corresponding to the communication key and a vehicle identifier of the first terminal to the cloud server. In another manner, the first terminal uploads the ciphertext of the to-be-transmitted data and the key identifier corresponding to the communication key to the cloud server. In this way, the cloud server can decrypt the ciphertext of the data by using the corresponding communication key. The key identifier corresponding to the communication key may be obtained by the first terminal from the second message, that is, generated when the certificate and key management server allocates the communication key to the first terminal.

According to a third aspect, the invention provides a communication key configuration apparatus according to claim 14 and a computer-readable storage medium according to claim 15.

### BRIEF DESCRIPTION OF DRAWINGS

FIG. 1 is a schematic diagram of an architecture of a communication system according to this application;
FIG. 2 is a schematic diagram of a structure of a communication key configuration system according to an embodiment of this application;
FIG. 3 is a schematic flowchart of a communication key configuration method according to an embodiment of this application;
FIG. 4 is a schematic flowchart of another communication key configuration method according to an embodiment of this application;
FIG. 5 is a schematic flowchart of still another communication key configuration method according to an embodiment of this application;
FIG. 6 is a schematic flowchart of a method for obtaining a first certificate according to an embodiment of this application;
FIG. 7 is a schematic flowchart of a method for obtaining a second certificate according to an embodiment of this application;
FIG. 8 is a schematic diagram of a structure of a communication key configuration apparatus according to an embodiment of this application;
FIG. 9 is a schematic diagram of a structure of a communication key configuration apparatus according to an embodiment of this application; and
FIG. 10 is a schematic diagram of a structure of a chip according to an embodiment of this application.

### DESCRIPTION OF EMBODIMENTS

The following describes technical solutions in embodiments of this application with reference to accompanying drawings in embodiments of this application.

It should be noted that, in embodiments of this application, ordinal numbers such as "first" and "second" are used to distinguish between a plurality of objects, and are not intended to limit a sequence, a time sequence, priorities, or importance of the plurality of obj ects. For example, a first message, a second message, a third message, and the like are merely used to distinguish between different message types, but do not indicate that the two types of messages have different structures, different importance, and the like.

In embodiments of this application, a public key and a private key are usually used in a signature process. The public key and the private key are a pair of keys for mutual encryption and decryption. The private key is privately stored, and the public key is available to the public. During use, the public key is used to encrypt a plaintext to obtain a ciphertext, and the private key is used to decrypt the ciphertext to obtain the plaintext. Alternatively, the private key is used to sign an original text, and the public key and a signature are used to verify whether the original text is tampered with.

A working procedure of signature and signature verification may be as follows (using an example in which both parties are respectively a node A and a node B): The node A performs hashing (hash) on an original text to obtain a first hash value; the node A encrypts the first hash value by using a private key of the node A, to obtain a signature value, and sends the original text and the signature value to the node B; the node B decrypts the signature value by using a public key, to obtain a second hash value; and the node B performs hashing on the original text to obtain a third hash value, and determines, through comparison, whether the second hash value is consistent with the third hash value, to verify whether the original text is tampered with.

A source of the public key may be a public key in a digital certificate. The digital certificate (also referred to as a security certificate) is a digital certification that identifies an identity, and is generally a relatively authoritative and impartial certificate issued by a certificate authority (Certificate Authority, CA) center or a trusted third-party device. The node B may determine, by using a digital certificate of the public key, that the public key is a public key of the node B.

It should be understood that the foregoing explanations about the public key, the private key, the signature, and the like are merely used to briefly describe an implementation principle, and during use, do not limit implementation to use of a same parameter. For example, there may be other improvements and variations in a specific implementation process of the signature. In addition, it should be noted that "certification", "verification", and "verifying" mentioned in embodiments of this application may be used to indicate meanings of a check on correctness or reasonableness and a check on tampering.

A system architecture and a service scenario in embodiments of this application are described.

It should be noted that the system architecture and the service scenario described in this application are intended to describe the technical solutions in this application more clearly, and do not constitute a limitation on the technical solutions provided in this application. A person of ordinary skill in the art may know that with evolution of the system architecture and emergence of new service scenarios, the technical solutions provided in this application are also applicable to similar technical problems.

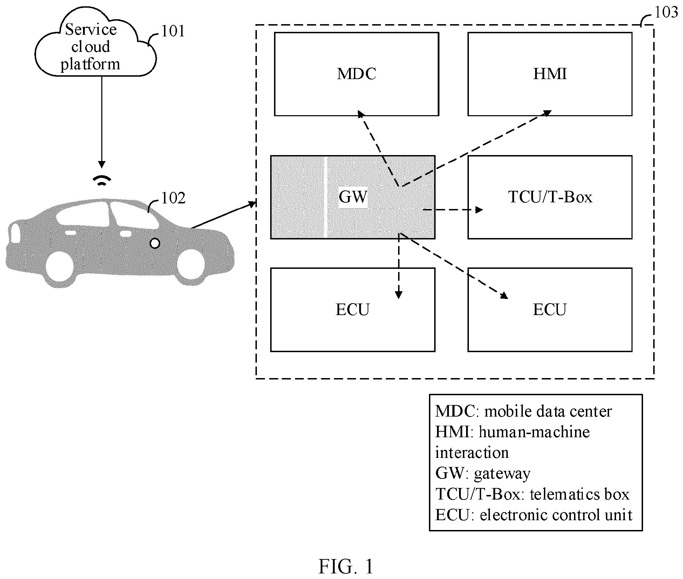

FIG. 1 is a schematic diagram of an architecture of a communication system according to an example of this application. The communication system may include a service cloud platform 101 (which may also be referred to as a cloud server) and a vehicle 102. For example, but not limited to the example, the vehicle 102 is a vehicle based on a vehicle electrical/electronic architecture (Electrical/Electronic Architecture, E/E). With reference to an area 103, the vehicle 102 may include at least one of the following components: a mobile data center (Mobile Data Center, MDC), human-machine interaction (Human-Machine Interaction, HMI), a gateway (gateway, GW), a telematics box (Telematics Box, T-Box, or referred to as TCU), an electronic control unit (Electronic Control Unit, ECU), and the like. The GW is a core component of the entire vehicle, serves as a data exchange hub of networks of the entire vehicle, and may route data of networks such as a controller area network (Controller Area Network, CAN), a local interconnect network (Local Interconnect Network, LIN), and media oriented system transport (Media Oriented System Transport, MOST) in different networks. The MDC is an intelligent vehicle-mounted computing platform of the vehicle. The T-Box is mainly configured to communicate with the outside of the vehicle, a back-end system, and a mobile phone application (application, APP). The HMI is an information input, entertainment, and interaction system of the vehicle. The ECU is a controller in the vehicle.

To ensure security of data to be uploaded by the vehicle 102 to the service cloud platform 101, the vehicle 102 needs to obtain a communication key through key agreement or key derivation with the service cloud platform 101. Then, the vehicle 102 encrypts the to-be-uploaded data by using the communication key, and then uploads the encrypted data to the service cloud platform 101. However, through key agreement or key derivation in a data upload connection establishment process, a plurality of message exchanges are required, and a volume of communication data is relatively large, thereby affecting performance of data uploading. In addition, security of a temporary key obtained through key agreement is related to randomness of a random number generated by both agreement parties. Once the randomness of the random number decreases, a risk of being likely to be predicted by an attacker is caused, and consequently, data security is poor.

This application provides a communication key configuration system, so that a communication key can be directly allocated to a vehicle to reduce a quantity of required message exchanges, and security of allocation and transmission of the communication key can be ensured, thereby ensuring data security.

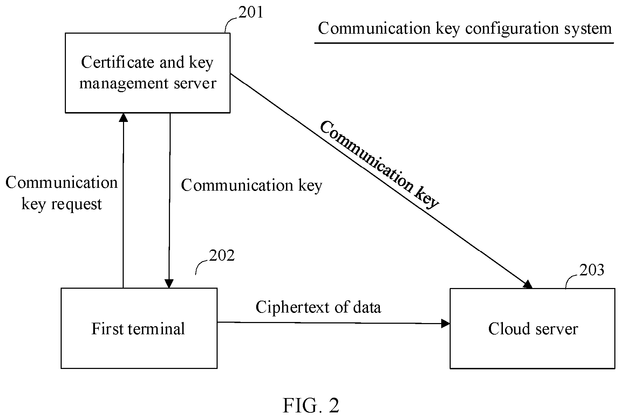

FIG. 2 is a schematic diagram of a structure of a communication key configuration system according to an embodiment of this application. The system includes at least two devices of a certificate and key management server 201, a first terminal 202, and a cloud server 203. For example, the system includes two devices of the certificate and key management server 201, the first terminal 202, and the cloud server 203. In this case, the system may interact with another device other than the two devices by using a communications interface. In FIG. 2, an example in which the system includes three devices is used for description.

The certificate and key management server 201 is a device having a data processing capability, and may be a physical device like a host or a server, or may be a virtual device like a virtual machine or a container. The certificate and key management server 201 can perform information transmission with the first terminal 202, for example, allocate a communication key to the first terminal 202. The certificate and key management server 201 can perform information transmission with the cloud server 203, for example, push the communication key allocated to the first terminal 202 to the cloud server 203 through a secure channel. In some specific implementation scenarios, the certificate and key management server 201 is also referred to as a certificate/key management server.

The first terminal 202 may be a vehicle, or a device in a vehicle, for example, a vehicle-mounted device. Optionally, the first terminal 202 may be an intelligent device like a robot or an uncrewed aerial vehicle or a transportation tool like a vehicle, or may be a component, a module, or the like in a device like an intelligent device or a transportation tool.

The cloud server 203 is a device having a data processing capability, and may be a physical device like a host or a server, or may be a virtual device like a virtual machine or a container. It should be noted that, for ease of description herein, the cloud server 203 is referred to as a server. In a specific implementation process, the cloud server 203 may be a server, or may be another device having a data processing capability, or may be a module (for example, a chip or an integrated circuit) in a device. The cloud server 203 is a server that collects data such as geographical location information, a vehicle trajectory, and vehicle surrounding information collected by the vehicle.

Based on the communication key configuration system, the terminal may perform a communication key initialization operation, which may also be referred to as a communication key configuration operation. For example, the first terminal 202 may send a communication key request to the certificate and key management server 201, and the communication key request may include a first certificate and a second certificate of the first terminal 202. The certificate and key management server 201 verifies, by using the first certificate, that the first terminal 202 has an identity credential for requesting a communication key by using the second certificate. The certificate and key management server 201 may encrypt, by using the second certificate, the communication key allocated to the first terminal 202, to obtain a ciphertext of the communication key, and then transmit the ciphertext of the communication key to the first terminal 202, thereby ensuring security of the communication key. Optionally, the communication key request may further include a first signature, a request time, and the like. Specifically, the first signature may be used by the certificate and key management server 201 to verify, with reference to the first certificate, that the first terminal 202 has the identity credential for requesting the communication key by using the second certificate. The request time may be used by the certificate and key management server 201 to verify freshness of the communication key request, to avoid a case in which the communication key request is replicated to repeatedly request the communication key. The first terminal 202 may receive the ciphertext of the communication key from the certificate and key management server 201. Optionally, the certificate and key management server 201 may transmit the communication key allocated to the first terminal 202 to the cloud server 203 through the secure channel.

Optionally, the first terminal 202 may include a certificate and key management module. The certificate and key management module may perform the foregoing operation of requesting the communication key, and operations such as receiving the ciphertext of the communication key from the certificate and key management server 201, and decrypting the ciphertext of the communication key. Details are not described herein.

Optionally, based on the communication key configuration system, the terminal may perform an operation like encrypting to-be-transmitted data. For example, the first terminal 202 may encrypt the to-be-transmitted data by using the communication key obtained through requesting, to obtain a ciphertext of the data.

Optionally, the first terminal 202 may further include a data encryption module, and the data encryption module may encrypt to-be-transmitted data by using the communication key obtained through requesting, to obtain a ciphertext of the data. Optionally, the certificate and key management module and the data encryption module in the first terminal 202 may be deployed in a same module shown in FIG. 1, for example, the MDC. Alternatively, the first terminal 202 has a plurality of sets of certificate and key management modules and data encryption modules. In each of the plurality of modules shown in FIG. 1, for example, vehicle-mounted devices such as the MDC, the T-Box, and the GW, one or more sets of certificate and key management modules and data encryption modules may be deployed, to manage different certificates and communication keys.

Optionally, based on the communication key configuration system, an operation like secure data transmission may be performed between the terminal and the cloud server. For example, the first terminal 202 uploads a ciphertext of data to the cloud server 203. Optionally, the first terminal 202 may further include a data packing module and a transmission module. The data packing module may pack the ciphertext of the data into a data packet, and the transmission module sends the data packet to the cloud server 203.

Optionally, based on the communication key configuration system, the cloud server may perform an operation like data decryption. For example, the cloud server 203 decrypts the ciphertext of the data by using the communication key of the first terminal 202 transmitted by the certificate and key management server 201.

Optionally, before the terminal performs the communication key initialization operation, the terminal may further perform a certificate initialization operation. For example, the first terminal 202 may separately send a first certificate request and a second certificate request to the certificate and key management server 201, or the first terminal 202 may send a certificate request to the certificate and key management server 201 to request the first certificate and the second certificate. Then, the certificate and key management server 201 may separately or simultaneously allocate the first certificate and the second certificate to the first terminal 202.

The first certificate request may include a device certificate and a first public key of the first terminal 202. The certificate and key management server 201 may verify, based on the device certificate, that the first terminal 202 has an identity credential for requesting the first certificate. The certificate and key management server 201 may generate the first certificate by using the first public key, and send the first certificate to the first terminal 202. The second certificate request may include the first certificate and a second public key of the first terminal 202. The certificate and key management server 201 may verify, based on the first certificate, that the first terminal 202 has the identity credential for requesting the communication key by using the second certificate. The certificate and key management server 201 may generate the second certificate by using the second public key, and send the second certificate to the first terminal 202. Optionally, the certificate request may include the device certificate, the first public key, and the second public key of the first terminal 202. The certificate and key management server 201 may verify, based on the device certificate, that the first terminal 202 has the identity credential for requesting the first certificate. The certificate and key management server 201 may generate the first certificate by using the first public key, and generate the second certificate by using the second public key. The certificate and key management server 201 may send the first certificate and the second certificate to the first terminal 202.

Optionally, in some scenarios such as terminal initialization, for example, a scenario in which the vehicle is started for the first time, related operations of certificate initialization and communication key initialization may be simultaneously performed. In some scenarios such as a data upload service, a related operation of communication key initialization may be performed, that is, a related certificate of the terminal has been achieved in a previous certificate initialization phase.

Optionally, the foregoing operations such as the first certificate request, the second certificate request, or the certificate request and receiving the first certificate and the second certificate from the certificate and key management server 201 may be performed by the certificate and key management module in the first terminal 202.

Optionally, at least one of a certificate management module and a key management module may be deployed in the certificate and key management server 201. The certificate and key management server 201 may perform a related operation of certificate initialization by using the certificate management module, for example, allocating the first certificate and the second certificate to the first terminal 202. The certificate and key management server 201 may perform the related operation of communication key initialization by using the key management module, for example, allocating the communication key to the first terminal 202.

Optionally, the cloud server 203 may include at least one of a certificate and key management module, a data decryption module, a data unpacking module, and a transmission module. The certificate and key management module may actively obtain the communication key of the first terminal 202 from the certificate and key management server, or may receive the communication key of the first terminal 202 pushed by the certificate and key management server. The transmission module may receive the data packet from the first terminal 202, the data unpacking module obtains the ciphertext of the data from the data packet, and then the decryption module decrypts the ciphertext of the data based on the communication key of the first terminal 202, to obtain the data.

It can be learned that, in the system shown in FIG. 2, the certificate and key management server 201 may directly allocate the communication key to the first terminal 202, to avoid a problem that a key obtained through key agreement cannot ensure key strength. In addition, the certificate and key management server 201 may verify, by using the first certificate, that the first terminal 202 has the identity credential for requesting the communication key by using the second certificate, to ensure that the communication key is allocated to a terminal having an identity credential. In addition, the certificate and key management server may further encrypt, by using the second certificate, the communication key allocated to the first terminal 202, to ensure security of transmission of the communication key. In addition, in the system, the certificate and key management server 201 allocates the communication key to the first terminal 202. This also helps meet a supervision and audit requirement, compared with direct key agreement on a key between the first terminal 202 and the cloud server 203.

From a perspective of interaction between the certificate and key management server, the first terminal, and the cloud server, the following provides a related description of a communication key configuration method provided in this application.

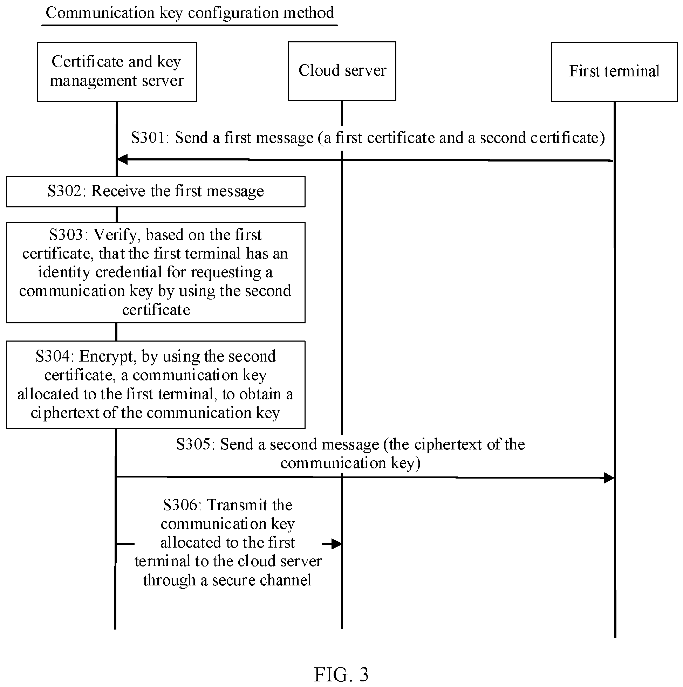

FIG. 3 is a schematic flowchart of a communication key configuration method according to an embodiment of this application. Optionally, the communication key configuration method shown in FIG. 3 may be implemented based on the structure shown in FIG. 2. As shown in FIG. 3, the communication key configuration method may include but is not limited to the following steps.

S301: A first terminal sends a first message to a certificate and key management server.

S302: The certificate and key management server receives the first message.

For a related description of the certificate and key management server, refer to the foregoing description of the certificate and key management server 201. The certificate and key management server may be a server, or a server cluster including a plurality of servers, or a distributed server.

The first message includes a first certificate and a second certificate. The first certificate is used to verify that the first terminal has an identity credential for requesting a communication key by using the second certificate, and the second certificate is used to encrypt a communication key allocated to the first terminal. It should be understood that the first message may alternatively include a plurality of messages. For example, the first message includes a message A and a message B, where the message A includes the first certificate, and the message B includes the second certificate. Optionally, the first message may be a communication key request message, or may be a message of another type. Optionally, the first message may carry an identifier to notify the certificate and key management server that the first terminal requests the communication key.

S303: The certificate and key management server verifies, based on the first certificate, that the first terminal has the identity credential for requesting the communication key by using the second certificate.

Optionally, the first certificate may be different from a device certificate, and the first certificate may be dedicated to verifying the identity credential of the first terminal. This avoids leakage of the communication key, due to a problem that a private key corresponding to the device certificate is likely to be leaked because the device certificate is not easily updated or revoked and the first terminal directly uses the device certificate to request a key, causing an excessively large quantity of times of using the device certificate. Optionally, the first certificate may be updated more frequently than the device certificate. Even if a private key corresponding to the first certificate is leaked, a new first certificate may be applied for again, and the leaked registration certificate may be revoked, so that subsequent verification on the identity credential is not affected, thereby improving security.

Optionally, the certificate and key management server may further verify the first certificate by using a root certificate of the first certificate, to ensure that the first certificate is issued by the certificate and key management server and is trusted.

S304: The certificate and key management server may encrypt, by using the second certificate, the communication key allocated to the first terminal, to obtain a ciphertext of the communication key.

Optionally, the second certificate may be a certificate dedicated to distribution of the communication key. The second certificate is used to ensure confidentiality of transmission of the communication key. This can further improve update frequency of the second certificate, compared with a manner of encrypting the communication key by using the device certificate or the first certificate. Even if a second private key corresponding to the second certificate is leaked, a new second certificate may be applied for, and the leaked second certificate may be revoked, so that subsequent transmission of the communication key is not affected, thereby improving security.

S305: The certificate and key management server sends a second message to the first terminal.

The second message includes the ciphertext of the communication key allocated to the first terminal.

S306: The certificate and key management server transmits the communication key allocated to the first terminal to a cloud server through a secure channel.

Optionally, a sequence of performing steps S305 and S306 is not limited in this application.

Correspondingly, the first terminal may receive the second message, and the cloud server may obtain the communication key of the first terminal.

Optionally, the certificate and key management server actively pushes the communication key allocated to the first terminal to the cloud server through the secure channel. Optionally, the cloud server may actively obtain the communication key of the first terminal from the certificate and key management server. This is not limited in this embodiment of this application.

It can be learned that, in this embodiment of this application, after receiving the first message from the first terminal, the certificate and key management server may directly allocate the communication key to the first terminal, to avoid a problem that a key obtained through key agreement cannot ensure key strength. In addition, the certificate and key management server may verify, by using the first certificate, that the first terminal has the identity credential for requesting the communication key by using the second certificate, to ensure that the communication key is allocated to a vehicle having an identity credential. In addition, the certificate and key management server may further encrypt, by using the second certificate, the communication key allocated to the vehicle, to ensure security of transmission of the communication key. In addition, in this application, the certificate and key management server allocates the communication key to the vehicle. This also helps meet a supervision and audit requirement, compared with direct key agreement on a key between the vehicle and the cloud server.

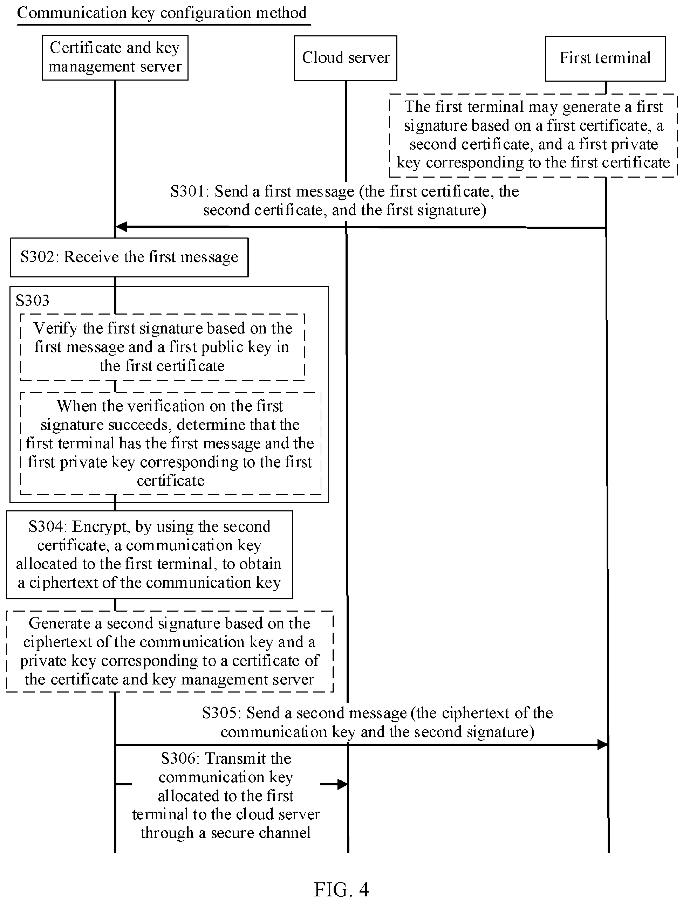

FIG. 4 is a schematic flowchart of another communication key configuration method according to an embodiment of this application. In the communication key configuration method shown in FIG. 4, compared with the communication key configuration method shown in FIG. 3, the first message further includes a first signature. As shown in FIG. 4, before the first terminal sends the first message, the first terminal may generate the first signature based on the first certificate, the second certificate, and a first private key corresponding to the first certificate. For example, the first terminal signs content (for example, the first certificate and the second certificate) in the first message by using the first private key corresponding to the first certificate, to obtain the first signature. An algorithm used for the signature may be learned of based on the first certificate.

Correspondingly, before the certificate and key management server sends the second message, for example, as shown in FIG. 4, after receiving the first message, the certificate and key management server verifies the first signature based on the first message and a first public key in the first certificate; and when the verification on the first signature succeeds, the certificate and key management server determines that the first terminal has the first message and the first private key corresponding to the first certificate. The first message and the first private key are used to indicate that the first terminal has the identity credential for requesting the communication key by using the second certificate. It can be learned that, in this implementation, the certificate and key management server learns that the first terminal is valid and has the corresponding identity credential, thereby helping ensure security of allocation of the communication key.

Optionally, the second message may further include a second signature. As shown in FIG. 4, the certificate and key management server generates the second signature based on the ciphertext of the communication key and a private key corresponding to a certificate of the certificate and key management server. Correspondingly, as shown in FIG. 4, after the first terminal receives the second message, the first terminal verifies the second signature by using the ciphertext of the communication key and a public key in the certificate of the certificate and key management server; and when the verification on the second signature succeeds, the first terminal determines that the second message is from the certificate and key management server. It can be learned that, in this implementation, the first terminal verifies validity of a source of the second message based on the second signature, so that the first terminal can use the communication key to transmit data, thereby improving security of the communication key.

That the certificate and key management server generates the second signature based on the ciphertext of the communication key and a private key corresponding to a certificate of the certificate and key management server may include: The certificate and key management server calculates a hash value of the ciphertext of the communication key by using the private key corresponding to the certificate of the certificate and key management server, to obtain the second signature.

Optionally, the first message may further include a request time of the communication key, that is, a sending time of the first message, so that freshness of the first message is ensured, to avoid a case in which the communication key is requested for a plurality of times after the first message is replicated by another third party. Correspondingly, the second message may further include a response time, that is, a sending time of the second message, so that freshness of the second message can also be ensured, to avoid a case in which the second message is used for a plurality of times after being replicated by another third party, causing insufficient security of encrypted data.

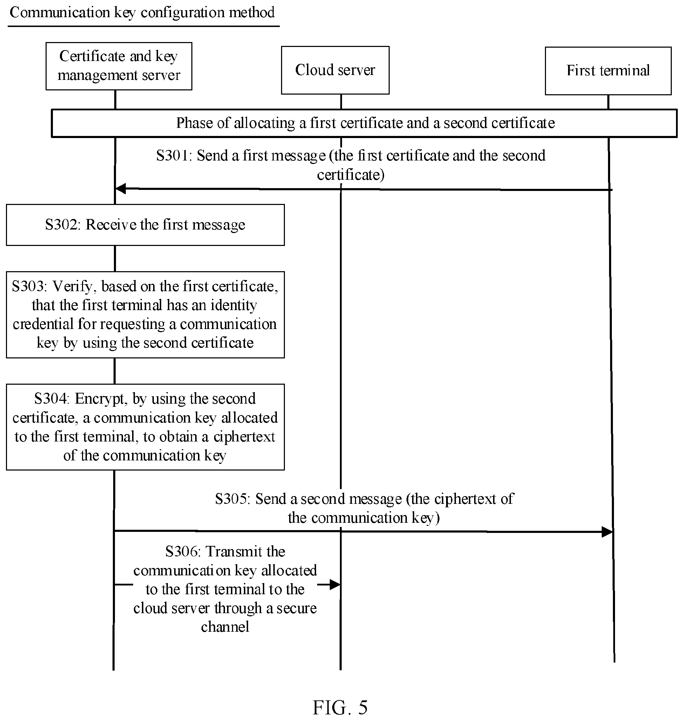

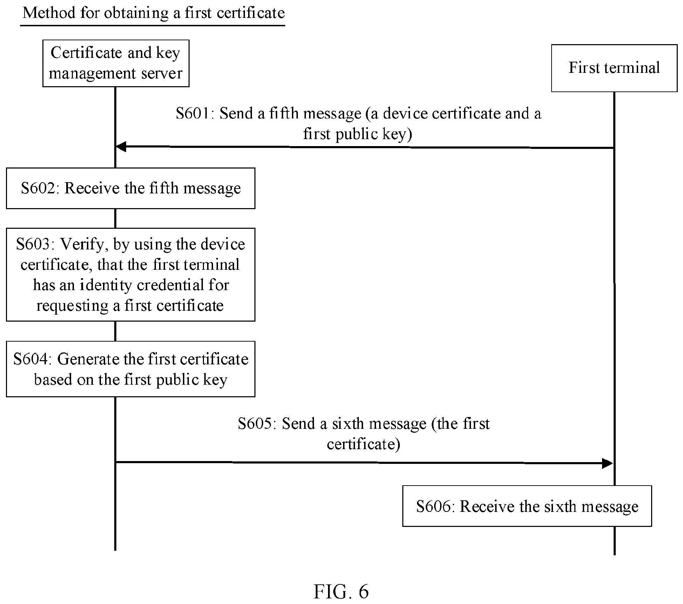

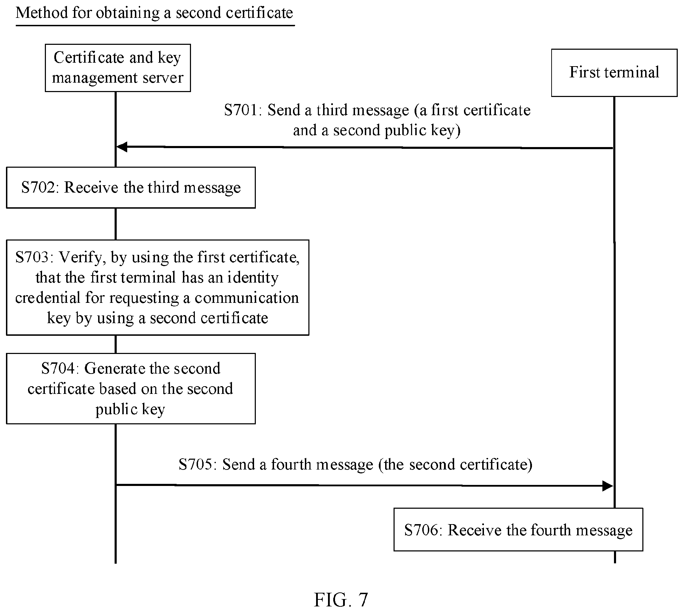

FIG. 5 is a schematic flowchart of still another communication key configuration method according to an embodiment of this application. A difference between the communication key configuration method shown in FIG. 5 and the communication key configuration methods shown in FIG. 3 and FIG. 4 lies in that, before related operations of the communication key configuration methods shown in FIG. 3 and FIG. 4, the certificate and key management server may allocate the first certificate and the second certificate to the first terminal, that is, there is a phase of allocating the first certificate and the second certificate. With reference to FIG. 6 and FIG. 7, the following describes a procedure of obtaining the first certificate and a procedure of obtaining the second certificate.

As shown in FIG. 6, in a schematic flowchart of obtaining the first certificate, the procedure of obtaining the first certificate may include but is not limited to the following related operations.

S601: The first terminal sends a fifth message to the certificate and key management server.

S602: The certificate and key management server receives the fifth message from the first terminal.

The fifth message includes the device certificate and the first public key, and the device certificate needs to be preconfigured in the first terminal. The first public key may be a public-private key pair generated by the first terminal by using an asymmetric cryptographic algorithm, and the public-private key pair includes the first public key and the first private key. The first public key is used by the certificate and key management server to generate the first certificate. The first private key is used to sign the first message, a third message, or a second public key in the third message, to notify the certificate and key management server that the first terminal has the identity credential for requesting the communication key by using the second certificate.

S603: The certificate and key management server verifies, by using the device certificate, that the first terminal has an identity credential for requesting the first certificate.

A root certificate of the device certificate needs to be preconfigured in the certificate and key management server to verify the device certificate of the first terminal, to determine whether the first terminal has the identity credential for requesting the first certificate.

Optionally, the fifth message further includes a fourth signature. Before the first terminal sends the fifth message to the certificate and key management server, the method further includes: The first terminal generates the fourth signature based on the first public key and a third private key corresponding to the device certificate, where the fourth signature is used by the certificate and key management server to verify, with reference to the device certificate, that the first terminal has the identity credential for requesting the first certificate. The first terminal may sign the first public key or the fifth message by using the third private key corresponding to the device certificate, to obtain the fourth signature. Optionally, an algorithm used for the signature may be specified by the device certificate.

Correspondingly, that the certificate and key management server verifies, by using the device certificate, that the first terminal has an identity credential for requesting the first certificate further includes: The certificate and key management server verifies the fourth signature based on the first public key and a third public key in the device certificate; and when the verification on the fourth signature succeeds, the certificate and key management server determines that the first terminal has the first public key and the third private key corresponding to the device certificate, where the first public key and the third private key are used to indicate that the first terminal has the identity credential for requesting the first certificate. In other words, the certificate and key management server not only verifies the device certificate by using the root certificate of the device certificate, but also verifies, when the verification on the device certificate succeeds, the fourth signature by using the third public key in the device certificate and the first public key in the fifth message. In this way, it is ensured, by using a verification result indicating that integrity of the first public key is not tampered with, that the vehicle to which the first certificate is allocated is a vehicle having a corresponding identity credential.

S604: The certificate and key management server generates the first certificate based on the first public key.

S605: The certificate and key management server sends a sixth message to the first terminal, where the sixth message includes the first certificate.

S606: The first terminal receives the sixth message.

In other words, the sixth message is sent after the certificate and key management server verifies, by using the device certificate, that the first terminal has the identity credential for requesting the first certificate.

Optionally, there may be a plurality of first certificates obtained in this part, and the first certificates correspond to different service data. For example, if a laser radar data upload service is enabled for some vehicles, but a camera image upload service is not enabled for the vehicles, the certificate and key management server may allocate only one first certificate corresponding to the laser radar data upload service. If the two services are enabled for some other vehicles, the certificate and key management server may allocate two registration certificates to the vehicles, and the two registration certificates respectively correspond to the two services. Correspondingly, when the first terminal performs the foregoing communication key configuration method, the first terminal may add corresponding first certificates for different services.

Optionally, the fifth message may further include a request time of the first certificate, that is, a sending time of the fifth message, so that freshness of the fifth message is ensured, to avoid a case in which the first certificate is requested for a plurality of times after the fifth message is replicated by another third party. Correspondingly, the sixth message may further include a response time, that is, a sending time of the sixth message, so that freshness of the sixth message can also be ensured, to avoid a case in which the sixth message is used for a plurality of times after being replicated by another third party, causing insufficient security of the first certificate.

Optionally, the fourth signature may alternatively be generated with reference to the request time of the first certificate. This is not limited in this application.

It can be learned that the procedure of obtaining the first certificate shown in FIG. 6 can ensure that the certificate and key management server allocates the first certificate to a vehicle having a corresponding identity credential.

As shown in FIG. 7, in a schematic flowchart of obtaining the second certificate, the procedure of obtaining the second certificate may include but is not limited to the following related operations.

S701: The first terminal sends the third message to the certificate and key management server.

S702: The certificate and key management server receives the third message from the first terminal.

The third message includes the first certificate and the second public key, and the first terminal has the first certificate.

S703: The certificate and key management server verifies, by using the first certificate, that the first terminal has the identity credential for requesting the communication key by using the second certificate.

Optionally, the third message further includes a third signature. Before the first terminal sends the third message to the certificate and key management server, the method further includes: The first terminal generates the third signature based on the second public key and the first private key corresponding to the first certificate, where the third signature is used by the certificate and key management server to verify, with reference to the first certificate, that the first terminal has the identity credential for requesting the communication key by using the second certificate. The first terminal may sign the second public key or the third message by using the first private key corresponding to the first certificate, to obtain the third signature. Optionally, an algorithm used for the signature may be specified by the first certificate.

Correspondingly, that the certificate and key management server verifies, by using the first certificate, that the first terminal has the identity credential for requesting the communication key by using the second certificate further includes: The certificate and key management server verifies the third signature based on the second public key and the first public key in the first certificate; and when the verification on the third signature succeeds, the certificate and key management server determines that the first terminal has the first public key and the third private key corresponding to the device certificate. The first public key and the third private key are used to indicate that the first terminal has the identity credential for requesting the communication key by using the second certificate. In other words, the certificate and key management server not only verifies the first certificate by using the device certificate, but also verifies, when the verification on the first certificate succeeds, the third signature by using the first public key in the first certificate and the second public key in the third message. In this way, it is ensured, by using a verification result indicating that integrity of the second public key is not tampered with, that the vehicle to which the second certificate is allocated is a vehicle having a corresponding identity credential.

S704: The certificate and key management server generates the second certificate based on the second public key.

S705: The certificate and key management server sends a fourth message to the first terminal, where the fourth message includes the second certificate.

S706: The first terminal receives the fourth message.

In other words, the fourth message is sent after the certificate and key management server verifies, by using the first certificate, that the first terminal has the identity credential for requesting the communication key by using the second certificate.

Optionally, there may be a plurality of second certificates obtained in this part, and the second certificates are respectively used to protect different communication keys. For example, when a data encryption and upload service is actually performed, data that needs to be uploaded may have different classifications and corresponding security requirements. For example, laser radar data may include geographic information coordinates, laser point cloud raw data, structured data, and the like, and security requirements of these data may be different. For example, a security requirement of high-precision geographic information coordinate data is very high, and a communication key used for encryption needs to be updated every day. However, a security requirement of the laser point cloud raw data is relatively low, and a communication key used for encryption may be updated once a month. Therefore, in this scenario, the certificate and key management server may allocate a plurality of second certificates to a vehicular device like the first terminal, to request different types of communication keys for encrypting different types of data. In other words, each type of communication key may be protected by using a different second certificate.

Optionally, the third message may further include a request time of the second certificate, that is, a sending time of the third message, so that freshness of the third message is ensured, to avoid a case in which the second certificate is requested for a plurality of times after the third message is replicated by another third party. Correspondingly, the fourth message may further include a response time, that is, a sending time of the fourth message, so that freshness of the fourth message can also be ensured, to avoid a case in which the sixth message is used for a plurality of times after being replicated by another third party, causing insufficient security of the second certificate.

Optionally, the third signature may alternatively be generated with reference to the request time of the second certificate. This is not limited in this application.

It can be learned that the procedure of obtaining the second certificate shown in FIG. 7 can ensure that the certificate and key management server allocates the second certificate to a vehicle having a corresponding identity credential.

An embodiment of this application provides a data encryption method. The data encryption method may use the communication key configuration methods shown in FIG. 3 and FIG. 4, and an obtained communication key is used to encrypt data collected by a first terminal, to obtain a ciphertext of the data, and upload the ciphertext of the data to a cloud server. The following briefly describes a data encryption procedure. The data encryption procedure may include but is not limited to the following steps.

S801: The first terminal determines to-be-encrypted data.

The to-be-encrypted data may be referred to as a plaintext. If the plaintext includes content that does not need to be encrypted, the content that does not need to be encrypted is set as recognizable data of a cryptographic algorithm (that is, as one of input parameters of the cryptographic algorithm), and content that needs to be encrypted is set as plaintext input of the cryptographic algorithm, to generate an initialization vector (initialization vector, IV). Optionally, a length of a parameter IV that needs to be used for data encryption and decryption is 128 bits. A method for generating the parameter IV is not limited in this embodiment of this application. Optionally, the parameter IV may include but is not limited to the following two manners:
Solution 1: The parameter IV consists of a 48-bit time and an 80-bit random number. The 48-bit time is a binary representation of a 14-bit decimal number consisting of "YYYYMMDDHHMMSS". The 80-bit random number is generated by using a random number generation algorithm.
Solution 2: The parameter IV is a random number (128 bits), which is obtained after an encryption time and the plaintext are concatenated and used as input of an encryption algorithm.

S802: The first terminal encrypts the plaintext by using the cryptographic algorithm and the allocated communication key, to generate a ciphertext.

S803: The first terminal determines the generated ciphertext, the parameter IV, an identifier of the communication key, and an identifier of the first terminal together as a data ciphertext.

Optionally, steps S801 to S803 may be performed by an encryption module in the first terminal.

The identifier of the communication key may be generated by a certificate and key management server when the certificate and key management server allocates the communication key to the first terminal, and then is carried in a second message and sent to the first terminal. In this way, when a plurality of communication keys are configured for the first terminal, the first terminal may add the identifier to the data ciphertext, to notify the cloud server that the data ciphertext needs to be decrypted by using the corresponding communication key.

The identifier of the first terminal may be information that can identify a vehicular device, such as a vehicle identification number (Vehicle Identification Number, VIN) or a device certificate serial number.

Optionally, after step S803, the first terminal may upload the data ciphertext to the cloud server, and a transmission process of the data ciphertext may be based on a secure transfer protocol, for example, the Hypertext Transfer Protocol over Secure Socket Layer (Hypertext Transfer Protocol over Secure Socket Layer, HTTPS).

It can be learned that, in the data encryption method, the communication key allocated by the certificate and key management server may be directly used to encrypt the data. This greatly reduces a quantity of exchanged messages required in a data upload process, and avoids impact of an excessively large quantity of exchanged messages on data uploading, compared with key agreement on or key derivation of a communication key between the first terminal and the cloud server.

Correspondingly, a non-claimed embodiment of this application provides a data decryption method.
The data decryption method may use the communication key configuration methods shown in FIG. 3 and FIG. 4, and a cloud server may perform a related operation by using a communication key transmitted by a certificate and key management server to the cloud server through a secure channel. The following briefly describes a data decryption procedure. The data decryption procedure may include but is not limited to the following steps.

S901: The cloud server receives a data ciphertext.

As described above, the data ciphertext includes the ciphertext generated in S802, the parameter IV, the identifier of the communication key, and the identifier of the first terminal.

S902: The cloud server determines the corresponding communication key based on the identifier of the communication key and the identifier of the first terminal.

S903: The cloud server uses a cryptographic algorithm to perform decryption by using the communication key and the parameter IV, to obtain a plaintext.

Optionally, the cloud server may further determine freshness of the data ciphertext based on a time bit in the parameter IV For example, if a difference between a time in the parameter IV and a current time is excessively large, the data ciphertext is considered invalid, thereby preventing the cloud server from obtaining an incorrect plaintext.

Optionally, the cloud server may output the obtained plaintext. Optionally, related operations of steps S901 to S903 may be performed by a decryption module in the cloud server.

It can be learned that, in the data decryption method, the cloud server may directly decrypt the data ciphertext by using the communication key allocated by the certificate and key management server to the first terminal. This greatly reduces a quantity of exchanged messages required in a data upload process, and avoids impact of an excessively large quantity of exchanged messages on data uploading, compared with key agreement on or key derivation of a communication key between the cloud server and the first terminal.

Optionally, in the foregoing data encryption method, before the data is encrypted, data compression may be performed first. Correspondingly, in the data decryption method, the plaintext obtained after the data ciphertext is decrypted may be decompressed. It can be learned that this implementation can process some upload services with a large data volume, for example, a camera image and video upload service.

It should be noted that, based on an actual requirement, a sequence of steps in the foregoing embodiments may be adjusted, steps may be combined, or a step may be deleted.

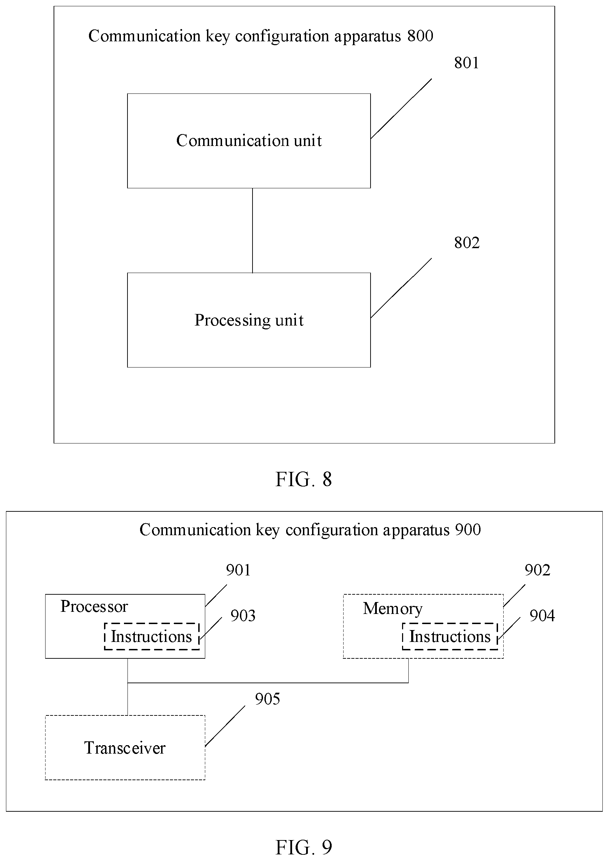

In the foregoing embodiments provided in this application, the related methods provided in embodiments of this application are separately described from perspectives of the certificate and key management server, the first terminal, the cloud server, and the like. To implement functions in the methods provided in embodiments of this application, the certificate and key management server, the first terminal, and the cloud server may include a hardware structure and a software module, and implement the foregoing functions in a form of the hardware structure, the software module, or a combination of the hardware structure and the software module. The following describes in detail related communication apparatuses in embodiments of this application with reference to FIG. 8 to FIG. 10.

FIG. 8 shows a schematic block diagram of a communication key configuration apparatus. A communication key configuration apparatus 800 may perform a related operation of the certificate and key management server in the foregoing method embodiments. The communication key configuration apparatus 800 may be the certificate and key management server shown in FIG. 2, or may be a component in the certificate and key management server, for example, a chip or an integrated circuit. The communication key configuration apparatus may include but is not limited to:
a communication unit 801, configured to receive a first message from a first terminal, where the first message includes a first certificate and a second certificate; and
a processing unit 802, configured to verify, by using the first certificate, that the first terminal has an identity credential for requesting a communication key by using the second certificate.

The processing unit 802 is further configured to encrypt, by using the second certificate, a communication key allocated to the first terminal, to obtain a ciphertext of the communication key.

The communication unit 801 is further configured to send a second message to the first terminal, where the second message includes the ciphertext of the communication key.

It can be learned that the communication key configuration apparatus can directly allocate the communication key to the first terminal, to reduce a quantity of message exchanges required for key agreement; and can further verify the identity credential of the first terminal by using the first certificate, and encrypt the communication key by using the second certificate, thereby greatly ensuring security of allocation and transmission of the communication key.

In an optional implementation, the first message further includes a first signature. That the processing unit 802 verifies, based on the first certificate, that the first terminal has an identity credential for requesting a communication key by using the second certificate is specifically: verifying the first signature based on a first public key in the first certificate; and when the verification on the first signature succeeds, determining that the first terminal has the first message and a first private key corresponding to the first certificate, where the first message and the first private key are used to indicate that the first terminal has the identity credential for requesting the communication key by using the second certificate. It can be learned that this implementation ensures that the communication key configuration apparatus allocates the communication key to the first terminal having the corresponding identity credential.

In an optional implementation, the second message further includes a second signature. Before the communication unit 801 sends the second message to the first terminal, the processing unit 802 is further configured to generate the second signature by using a private key corresponding to a certificate of the communication key configuration apparatus and the ciphertext of the communication key. The second signature is used to indicate that the second message is from the certificate and key management server.

In an optional implementation, the communication unit 801 is further configured to send the first certificate and the second certificate to the first terminal. Optionally, the communication unit 801 may separately send the first certificate and the second certificate at different moments, for example, separately send the first certificate and the second certificate by using a plurality of messages; or the communication unit 801 may send the first certificate and the second certificate at a same moment, for example, send the first certificate and the second certificate by using one message.

In an optional implementation, in the communication key configuration apparatus 800:

The communication unit 801 is further configured to receive a third message from the first terminal, where the third message includes the first certificate and a second public key.

The processing unit 802 is further configured to verify, by using the first certificate, that the first terminal has an identity credential for requesting a communication key by using the second certificate.

The processing unit 802 is further configured to generate the second certificate by using the second public key.

The communication unit 801 is configured to send a fourth message to the first terminal, where the fourth message includes the second certificate.

Optionally, in the communication key configuration apparatus 800, a related operation of generating the second certificate and a related operation of generating the second signature may be performed by different software modules, for example, separately performed by two processing units. That is, a quantity of processing units of the communication key configuration apparatus 800 is not limited in this embodiment of this application.

Optionally, an operation of verifying, by the processing unit 802 by using the first certificate, that the first terminal has the identity credential for requesting the communication key by using the second certificate may be performed before the communication unit 801 sends the fourth message to the first terminal.

Optionally, the third message further includes a third signature. That the processing unit 802 verifies, by using the first certificate, that the first terminal has an identity credential for requesting a communication key by using the second certificate includes:

The processing unit 802 is configured to verify the third signature based on the second public key and the first public key in the first certificate; and
the processing unit 802 is further configured to: when the verification on the third signature succeeds, determine that the first terminal has the second public key and the first private key corresponding to the first certificate, where the second public key and the first private key are used to indicate that the first terminal has the identity credential for requesting the communication key by using the second certificate.

In an optional implementation, in the communication key configuration apparatus 800:

The communication unit 801 is further configured to receive a fifth message from the first terminal, where the fifth message includes a device certificate and the first public key.

The processing unit 802 is further configured to verify, by using the device certificate, that the first terminal has an identity credential for requesting the first certificate.

The processing unit 802 is further configured to generate the first certificate based on the first public key.

The communication unit 801 is further configured to send a sixth message to the first terminal, where the sixth message includes the first certificate.

Optionally, in the communication key configuration apparatus 800, a related operation of generating the first certificate and a related operation of generating the second signature may be performed by different software modules, for example, separately performed by two processing units. That is, a quantity of processing units of the communication key configuration apparatus 800 is not limited in this embodiment of this application. Optionally, in the communication key configuration apparatus 800, a related operation of generating the first certificate, a related operation of generating the second certificate, and a related operation of generating the second signature may be performed by different software modules, for example, separately performed by three processing units. That is, a quantity of processing units of the communication key configuration apparatus 800 is not limited in this embodiment of this application.

Optionally, the fifth message further includes a fourth signature. That the processing unit 802 verifies, by using the device certificate, that the first terminal has an identity credential for requesting the first certificate is specifically: verifying the fourth signature based on the first public key and a third public key in the device certificate; and when the verification on the fourth signature succeeds, determining that the first terminal has the first public key and a third private key corresponding to the device certificate, where the first public key and the third private key are used to indicate that the first terminal has the identity credential for requesting the first certificate.

In the communication key configuration apparatus 800, the communication unit 801 is further configured to transmit the communication key allocated to the first terminal to a cloud server through a secure channel. Therefore, this helps the cloud server decrypt a ciphertext of data uploaded by the first terminal, to obtain the data.

In another embodiment, the communication key configuration apparatus 800 may perform a related operation of the first terminal in the foregoing method embodiments. The communication key configuration apparatus 800 shown in FIG. 8 may be the first terminal in the system shown in FIG. 1 or FIG. 2, or may be a component in the first terminal, for example, a chip or an integrated circuit, or for another example, a vehicle-mounted device like the MDC, the T-Box, or the GW shown in FIG. 1. In the communication key configuration apparatus 800:

The communication unit 801 is configured to send a first message to a certificate and key management server, where the first message includes a first certificate and a second certificate.

The communication unit 801 is further configured to receive a second message, where the second message is sent after the certificate and key management server verifies, by using the first certificate, that the first terminal has an identity credential for requesting a communication key by using the second certificate. The second message includes a ciphertext of a communication key of the first terminal.

The processing unit 802 decrypts the ciphertext of the communication key by using a second private key corresponding to the second certificate, to obtain the communication key.

It can be learned that the communication key configuration apparatus 800 can directly obtain the communication key from the certificate and key management server, to reduce a quantity of message exchanges required for key agreement; and can further send the first certificate and the second certificate to the certificate and key management server, so that the certificate and key management server can verify the identity credential of the first terminal by using the first certificate, and encrypt the communication key by using the second certificate, thereby greatly ensuring security of allocation and transmission of the communication key.

In an optional implementation, the first message further includes a first signature. Before the communication unit 801 sends the first message to the certificate and key management server, the processing unit 802 is further configured to generate the first signature by using the first certificate, the second certificate, and a first private key corresponding to the first certificate. The first signature is used by the certificate and key management server to verify, with reference to the first certificate, that the first terminal has the identity credential for requesting the communication key by using the second certificate.

In an optional implementation, the second message further includes a second signature. After the communication unit 801 receives the second message, the processing unit 802 is further configured to: verify the second signature by using a public key in a certificate of the certificate and key management server; and when the verification on the second signature succeeds, determine that the second message is from the certificate and key management server. It can be learned that, in this implementation, the communication key configuration apparatus 800 may learn of validity of a source of the communication key.

In an optional implementation, the communication unit 801 is further configured to request the first certificate and the second certificate from the certificate and key management server.

In an optional implementation, that the communication unit 801 requests the second certificate from the certificate and key management server is specifically: sending a third message to the certificate and key management server, where the third message includes the first certificate and a second public key; and receiving a fourth message, where the fourth message is sent after the certificate and key management server verifies, by using the first certificate, that the first terminal has the identity credential for requesting the communication key by using the second certificate, and the fourth message includes the second certificate generated by the certificate and key management server based on the second public key.

In an optional implementation, the third message further includes a third signature. Before the communication unit 801 sends the third message to the certificate and key management server, the processing unit 802 generates the third signature based on the second public key and the first private key corresponding to the first certificate. The third signature is used by the certificate and key management server to verify, with reference to the first certificate, that the first terminal has the identity credential for requesting the communication key by using the second certificate. In this way, the certificate and key management server learns, based on the third signature, that the communication key configuration apparatus 800 has the identity credential for requesting the communication key by using the second certificate, and therefore allocates the second certificate to the communication key configuration apparatus 800 in a timely manner.

In an optional implementation, that the communication unit 801 requests the first certificate from the certificate and key management server is specifically:
sending a fifth message to the certificate and key management server, where the fifth message includes a device certificate and a first public key; and
receiving a sixth message, where the sixth message is sent after the certificate and key management server verifies, by using the device certificate, that the first terminal has an identity credential for requesting the first certificate, and the sixth message includes the first certificate generated by the certificate and key management server based on the first public key.

Optionally, the fifth message further includes a fourth signature. Before the communication unit 801 sends the fifth message to the certificate and key management server, the processing unit 802 generates the fourth signature based on the first public key and a third private key corresponding to the device certificate. The fourth signature is used by the certificate and key management server to verify, with reference to the device certificate, that the first terminal has the identity credential for requesting the first certificate. In this way, the certificate and key management server learns, based on the fourth signature, that the communication key configuration apparatus 800 has the identity credential for requesting the first certificate, and therefore allocates the first certificate to the communication key configuration apparatus 800 in a timely manner.

In an optional implementation, after decrypting the ciphertext of the communication key by using the second private key corresponding to the second certificate, to obtain the communication key, the processing unit 802 may encrypt to-be-transmitted data by using the communication key, to obtain a ciphertext of the to-be-transmitted data, that is, a ciphertext of uploaded data. Then, the communication unit 801 uploads the ciphertext of the to-be-transmitted data to a cloud server.

In still another embodiment, the communication key configuration apparatus 800 may perform a related operation of the cloud server in the foregoing method embodiments. The communication key configuration apparatus 800 shown in FIG. 8 may be the cloud server in the system shown in FIG. 1 or FIG. 2, or may be a component in the cloud server, for example, a chip or an integrated circuit. In the communication key configuration apparatus 800, the communication unit 801 may be configured to obtain or receive a communication key allocated by a certificate and key management server to a first terminal; and the processing unit 802 may be configured to decrypt, based on the communication key, a ciphertext of data uploaded by the first terminal, to obtain the data. Therefore, this helps optimize an application like automated driving in a timely manner.

FIG. 9 shows a schematic block diagram of a communication key configuration apparatus 900.

In an implementation, the communication key configuration apparatus 900 corresponds to the certificate and key management server in the foregoing communication key configuration methods. Optionally, the communication key configuration apparatus 900 is an apparatus in the certificate and key management server that performs the foregoing method embodiments, for example, a chip, a chip system, or a processor. The communication key configuration apparatus 900 may be configured to implement the methods described in the foregoing method embodiments. For details, refer to the descriptions in the foregoing method embodiments.

In another implementation, the communication key configuration apparatus 900 corresponds to the first terminal in the foregoing communication key configuration methods. Optionally, the communication key configuration apparatus 900 is an apparatus in the first terminal that performs the foregoing method embodiments, for example, a chip, a chip system, a processor, or a vehicle-mounted device like the MDC, the T-Box, or the GW shown in FIG. 1.

The communication key configuration apparatus 900 may be configured to implement the methods described in the foregoing method embodiments. For details, refer to the descriptions in the foregoing method embodiments.

The communication key configuration apparatus 900 may include one or more processors 901. The processor 901 may be a general-purpose processor, a dedicated processor, or the like. The communication key configuration apparatus 900 may further include a transceiver 905. The transceiver 905 may be referred to as a transceiver unit, a transmitter-receiver, a transceiver circuit, or the like, and is configured to implement a transceiver function. The transceiver 905 may include a receiver and a transmitter. The receiver may be referred to as a receiving device, a receiver circuit, or the like, and is configured to implement a receiving function. The transmitter may be referred to as a sending device, a transmitter circuit, or the like, and is configured to implement a sending function. Optionally, the communication key configuration apparatus 900 may include one or more memories 902, and the one or more memories 902 may store instructions 904. The instructions 904 may be a computer program. The computer program may be run on the communication key configuration apparatus 900, so that the communication key configuration apparatus 900 performs the methods described in the foregoing method embodiments. Optionally, the memory 902 may further store data. The communication key configuration apparatus 900 and the memory 902 may be disposed separately, or may be integrated together.

In an implementation, when the communication key configuration apparatus 900 is configured to implement a function of the certificate and key management server in the foregoing method embodiments:

The processor 901 is configured to perform steps S303 and S304 shown in any one of FIG. 3 to FIG. 5; or perform steps S603 and S604 in FIG. 6; or perform steps S703 and S704 in FIG. 7.

The transceiver 905 is configured to perform steps S302, S305, and S306 shown in any one of FIG. 3 to FIG. 5; or perform steps S602 and S605 in FIG. 6; or perform steps S702 and S705 in FIG. 7.

In another implementation, when the communication key configuration apparatus 900 is configured to implement a function of the first terminal in the foregoing method embodiments:

The transceiver 905 is configured to perform step S301 and an operation of receiving a second message in the communication key configuration method shown in any one of FIG. 3 to FIG. 5; or perform step S601 and receive a sixth message in FIG. 6; or perform step S701 and receive a fourth message in FIG. 7.

In still another implementation, when the communication key configuration apparatus 900 is configured to implement a function of the cloud server in the foregoing method embodiments:

The transceiver 905 is configured to perform an operation of obtaining a communication key in the communication key configuration method shown in any one of FIG. 3 to FIG. 5, or an operation of receiving a ciphertext of data in the data encryption method.

The processor 901 is configured to perform a related operation of data decryption in the data decryption method.

In an implementation, the processor 901 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In an implementation, the processor 901 may store instructions 703, and the instructions may be a computer program. The computer program 903 is run on the processor 901, so that the communication key configuration apparatus 900 may perform the methods described in the foregoing method embodiments. The computer program 903 may be solidified into the processor 901. In this case, the processor 901 may be implemented by hardware.

In an implementation, the communication key configuration apparatus 900 may include a circuit, and the circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (N-type metal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

The communication key configuration apparatus 900 described in the foregoing embodiment may be a certificate and key management server or a component in the certificate and key management server. Alternatively, the communication key configuration apparatus 900 described in the foregoing embodiment may be a first terminal, like a vehicle, or a component in the first terminal, like a vehicle-mounted device. Alternatively, the communication key configuration apparatus 900 described in the foregoing embodiment may be a cloud server, a component in the cloud server, or the like. The communication key configuration apparatus 900 may be an independent device or may be a part of a relatively large device. For example, the communication key configuration apparatus 900 may be:
(1) an independent integrated circuit IC, a chip, or a chip system or subsystem;
(2) a module that can be embedded in another device; or
(3) a mobile unit, a vehicle-mounted cloud device, an artificial intelligence device, or the like.

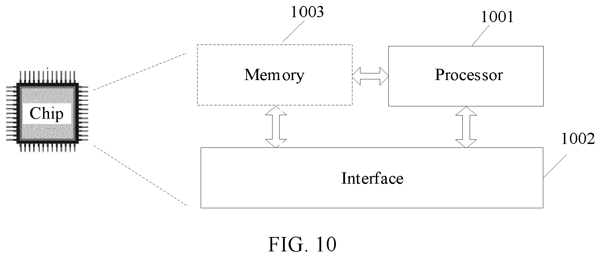

For a case in which the communication key configuration apparatus 900 may be a chip or a chip system, refer to a schematic diagram of a structure of a chip shown in FIG. 10. The chip shown in FIG. 10 includes a processor 1001 and an interface 1002. There may be one or more processors 1001, and there may be a plurality of interfaces 1002.

When the chip is configured to implement a function of the certificate and key management server in the foregoing method embodiments:

The processor 1001 is configured to perform steps S303 and S304 shown in any one of FIG. 3 to FIG. 5; or perform steps S603 and S604 in FIG. 6; or perform steps S703 and S704 in FIG. 7.

The interface 1002 is configured to perform steps S302, S305, and S306 shown in any one of FIG. 3 to FIG. 5; or perform steps S602 and S605 in FIG. 6; or perform steps S702 and S705 in FIG. 7.

When the chip is configured to implement a function of the first terminal in the foregoing method embodiments:

The interface 1002 is configured to perform step S301 and an operation of receiving a second message in the communication key configuration method shown in any one of FIG. 3 to FIG. 5; or perform step S601 and receive a sixth message in FIG. 6; or perform step S701 and receive a fourth message in FIG. 7.

When the chip is configured to implement a function of the cloud server in the foregoing method embodiments:
The interface 1002 is configured to perform an operation of obtaining a communication key in the communication key configuration method shown in any one of FIG. 3 to FIG. 5, or an operation of receiving a ciphertext of data in the data encryption method.

The processor 1001 is configured to perform a related operation of data decryption in the data decryption method.

Optionally, the chip may further perform a related implementation in the foregoing method embodiments. Details are not described herein.

A person skilled in the art may further understand that various illustrative logical blocks (illustrative logical blocks) and steps (steps) that are listed in embodiments of this application may be implemented by using electronic hardware, computer software, or a combination of electronic hardware and computer software. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This application further provides a communication key configuration system. The communication key configuration system may include at least two of the three communication key configuration apparatuses respectively described in the foregoing three embodiments. For example, the communication key configuration system includes: a communication key configuration apparatus, where the communication key configuration apparatus may perform a related operation of the certificate and key management server in the foregoing method embodiments; and another communication key configuration apparatus, where the communication key configuration apparatus may perform a related operation of the first terminal in the foregoing method embodiments. For another example, the communication key configuration system includes: a communication key configuration apparatus, where the communication key configuration apparatus may perform a related operation of the certificate and key management server in the foregoing method embodiments; another communication key configuration apparatus, where the communication key configuration apparatus may perform a related operation of the first terminal in the foregoing method embodiments; and still another communication key configuration apparatus, where the communication key configuration apparatus may perform a related operation of the cloud server in the foregoing method embodiments.

This application further provides a communication key configuration system. The communication key configuration system may include at least two devices of a certificate and key management server, a first terminal, and a cloud server. For example, the communication key configuration system includes the certificate and key management server in the foregoing method embodiments and the first terminal in the foregoing method embodiments. For another example, the communication key configuration system includes the certificate and key management server in the foregoing method embodiments, the first terminal in the foregoing method embodiments, and the cloud server in the foregoing method embodiments.

This application further provides a computer-readable storage medium. The computer-readable storage medium stores a computer program, and when the computer-readable storage medium is executed by a computer, the function in any one of the foregoing method embodiments is implemented.

This application further provides a computer program product. When the computer program product is executed by a computer, the function in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs. When the computer program is loaded and executed on a computer, the procedures or functions according to embodiments of this application are all or partially generated. The computer may be a general-purpose computer, a dedicated computer, a computer network, or other programmable apparatuses. The computer program may be stored in a computer-readable storage medium or may be transmitted from a computer-readable storage medium to another computer-readable storage medium. For example, the computer program may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

It may be clearly understood by a person skilled in the art that, for the purpose of convenient and brief description, for a detailed working process of the foregoing system, apparatus, and unit, refer to a corresponding process in the foregoing method embodiments. Details are not described herein.

The foregoing descriptions are merely specific implementations of this application, but are not intended to limit the protection scope of this application. The invention is defined by the claims.

## Claims

1. A communication key configuration method performed by a certificate and key management server, the method comprising the steps of:
• receiving (S302) a first message from a first terminal of a vehicle, wherein the first message comprises a first certificate of the first terminal and a second certificate of the first terminal;
• verifying (S303), by using the first certificate, that the first terminal has an identity credential for requesting a communication key by using the second certificate;
• encrypting (S304), by using the second certificate, the communication key allocated to the first terminal for encrypting data collected by the first terminal for uploading the data to a cloud server, to obtain a ciphertext of the communication key; and
• sending (S305) a second message to the first terminal, wherein the second message comprises the ciphertext of the communication key.

2. The method according to claim 1, wherein the first message further comprises a first signature; and
the verifying (S303), by using the first certificate, that the first terminal has the identity credential for requesting the communication key by using the second certificate comprises:
∘ verifying the first signature based on the first message and a first public key in the first certificate; and
∘ when the verification on the first signature succeeds, determining that the first terminal has a first private key corresponding to the first certificate, wherein the first private key is used to indicate that the first terminal has the identity credential for requesting the communication key by using the second certificate.

3. The method according to claim 1 or 2, wherein the second message further comprises a second signature; and
before the sending (S305) the second message to the first terminal, the method further comprises:
∘ generating the second signature based on the ciphertext of the communication key and a private key corresponding to a certificate of the certificate and key management server, wherein the second signature is used to indicate that the second message is from the certificate and key management server.

4. The method according to any one of claims 1 to 3, wherein, before the receiving (S302) the first message from the first terminal, the method further comprises:
∘ sending (S705) a fourth message to the first terminal, wherein the fourth message comprises the second certificate.

5. The method according to claim 4, wherein before the sending the fourth message to the first terminal, the method further comprises:
∘ receiving (S702) a third message from the first terminal, wherein the third message comprises the first certificate and a second public key;
∘ verifying (S703), by using the first certificate, that the first terminal has an identity credential for requesting a communication key by using the second certificate; and
∘ generating (S704) the second certificate by using the second public key.

6. The method according to claim 5, wherein the third message further comprises a third signature; and
the verifying (S703), by using the first certificate, that the first terminal has the identity credential for requesting the communication key by using the second certificate comprises:
∘ verifying the third signature based on the second public key and the first public key in the first certificate; and
∘ when the verification on the third signature succeeds, determining that the first terminal has the first private key corresponding to the first certificate, wherein the first private key is used to indicate that the first terminal has the identity credential for requesting the communication key by using the second certificate.

7. A communication key configuration method performed by a first terminal of a vehicle for encrypting data collected by the first terminal of the vehicle for uploading the data to a cloud server, the method comprising:
• sending (S301) a first message to a certificate and key management server, wherein the first message comprises a first certificate of the first terminal and a second certificate of the first terminal, wherein the first certificate is used to verify that the first terminal has an identity credential for requesting a communication key by using the second certificate;
• receiving (S305) a second message from the certificate and key management server, wherein the second message comprises a ciphertext of the communication key, wherein the communication key is used for encrypting the data collected by the first terminal for uploading the data to the cloud server, wherein the ciphertext of the communication key is a ciphertext obtained after the communication key of the first terminal is encrypted by using the second certificate; and
• decryptingthe ciphertext of the communication key by using a second private key corresponding to the second certificate, to obtain the communication key.

8. The method according to claim 7, wherein the second message is associated with a result of verifying that the first terminal has the identity credential for requesting the communication key by using the second certificate.

9. The method according to claim 7 or 8, wherein the first message further comprises a first signature; and
before the sending (S301) the first message to the certificate and key management server, the method further comprises:
∘ generating the first signature based on the first certificate, the second certificate, and a first private key corresponding to the first certificate, wherein the first signature is used to verify that the first terminal has the identity credential for requesting the communication key by using the second certificate.

10. The method according to any one of claims 7 to 9, wherein the second message further comprises a second signature; and
after the receiving (S305) the second message, the method further comprises:
∘ verifying the second signature by using a public key in a certificate of the certificate and key management server; and
∘ when the verification on the second signature succeeds, determining that the second message is from the certificate and key management server.

11. The method according to any one of claims 7 to 9, wherein, before the sending (S301) the first message to the certificate and key management server, the method further comprises:
∘ requestingthe second certificate from the certificate and key management server.

12. The method according to claim 11, wherein the requesting the second certificate from the certificate and key management server comprises:
∘ sending (S701) a third message to the certificate and key management server, wherein the third message comprises the first certificate and a second public key; and
∘ receiving (S705) a fourth message from the certificate and key management server, wherein the fourth message comprises the second certificate generated by using the second public key.

13. The method according to claim 12, wherein the third message further comprises a third signature; and
before the sending (S701) the third message to the certificate and key management server, the method further comprises:
∘ generating the third signature based on the second public key and the first private key corresponding to the first certificate, wherein the third signature is used to verify that the first terminal has the identity credential for requesting the communication key by using the second certificate.

14. A communication key configuration apparatus (800, 900), wherein the apparatus is configured to perform the method according to any one of claims 1 to 6, or any one of claims 7 to 13.

15. A computer-readable storage medium, wherein the computer-readable storage medium stores a computer program, and when the computer program is run on one or more processors, the one or more processors are caused to perform the method according to any one of claims 1 to 6 or the method according to any one of claims 7 to 13 is implemented.

## Patentansprüche

1. Verfahren zur Kommunikationsschlüsselkonfiguration, das von einem Zertifikats- und Schlüsselverwaltungsserver durchgeführt wird und die folgenden Schritte umfasst:
• Empfangen (S302) einer ersten Nachricht von einem ersten Endgerät eines Fahrzeugs, wobei die erste Nachricht ein erstes Zertifikat des ersten Endgeräts und ein zweites Zertifikat des ersten Endgeräts umfasst;
• Verifizieren (S303), unter Verwendung des ersten Zertifikats, dass das erste Endgerät einen Identitätsnachweis zum Anfragen eines Kommunikationsschlüssels unter Verwendung des zweiten Zertifikats aufweist;
• Verschlüsseln (S304) des dem ersten Endgerät zugewiesenen Kommunikationsschlüssels unter Verwendung des zweiten Zertifikats zum Verschlüsseln von von dem ersten Endgerät gesammelten Daten zum Hochladen der Daten auf einen Cloud-Server, um einen Chiffretext des Kommunikationsschlüssels zu erlangen; und
• Senden (S305) einer zweiten Nachricht an das erste Endgerät, wobei die zweite Nachricht den Chiffretext des Kommunikationsschlüssels umfasst.

2. Verfahren nach Anspruch 1, wobei die erste Nachricht ferner eine erste Signatur umfasst; und
das Verifizieren (S303), unter Verwendung des ersten Zertifikats, dass das erste Endgerät den Identitätsnachweis zum Anfragen des Kommunikationsschlüssels unter Verwendung des zweiten Zertifikats aufweist, Folgendes umfasst:
∘ Verifizieren der ersten Signatur basierend auf der ersten Nachricht und einem ersten öffentlichen Schlüssel in dem ersten Zertifikat; und
∘ wenn die Verifizierung der ersten Signatur erfolgreich ist, Bestimmen, dass das erste Endgerät einen ersten privaten Schlüssel aufweist, der dem ersten Zertifikat entspricht, wobei der erste private Schlüssel verwendet wird, um anzuzeigen, dass das erste Endgerät den Identitätsnachweis zum Anfragen des Kommunikationsschlüssels unter Verwendung des zweiten Zertifikats aufweist.

3. Verfahren nach Anspruch 1 oder 2, wobei die zweite Nachricht ferner eine zweite Signatur umfasst; und
das Verfahren vor dem Senden (S305) der zweiten Nachricht an das erste Endgerät ferner Folgendes umfasst:
∘ Erzeugen der zweiten Signatur basierend auf dem Chiffretext des Kommunikationsschlüssels und einem privaten Schlüssel, der einem Zertifikat des Zertifikats- und Schlüsselverwaltungsservers entspricht, wobei die zweite Signatur verwendet wird, um anzuzeigen, dass die zweite Nachricht von dem Zertifikats- und Schlüsselverwaltungsserver ist.

4. Verfahren nach einem der Ansprüche 1 bis 3, wobei das Verfahren vor dem Empfangen (S302) der ersten Nachricht von dem ersten Endgerät ferner Folgendes umfasst:
∘ Senden (S705) einer vierten Nachricht an das erste Endgerät, wobei die vierte Nachricht das zweite Zertifikat umfasst.

5. Verfahren nach Anspruch 4, wobei das Verfahren vor dem Senden der vierten Nachricht an das erste Endgerät ferner Folgendes umfasst:
∘ Empfangen (S702) einer dritten Nachricht von dem ersten Endgerät, wobei die dritte Nachricht das erste Zertifikat und einen zweiten öffentlichen Schlüssel umfasst;
∘ Verifizieren (S703), unter Verwendung des ersten Zertifikats, dass das erste Endgerät einen Identitätsnachweis zum Anfragen eines Kommunikationsschlüssels unter Verwendung des zweiten Zertifikats aufweist; und
∘ Erzeugen (S704) des zweiten Zertifikats unter Verwendung des zweiten öffentlichen Schlüssels.

6. Verfahren nach Anspruch 5, wobei die dritte Nachricht ferner eine dritte Signatur umfasst; und
das Verifizieren (S703), unter Verwendung des ersten Zertifikats, dass das erste Endgerät den Identitätsnachweis zum Anfragen des Kommunikationsschlüssels unter Verwendung des zweiten Zertifikats aufweist, Folgendes umfasst:
∘ Verifizieren der dritten Signatur basierend auf dem zweiten öffentlichen Schlüssel und dem ersten öffentlichen Schlüssel in dem ersten Zertifikat; und
wenn die Verifizierung der dritten Signatur erfolgreich ist, Bestimmen, dass das erste Endgerät den ersten privaten Schlüssel aufweist, der dem ersten Zertifikat entspricht, wobei der erste private Schlüssel verwendet wird, um anzuzeigen, dass das erste Endgerät den Identitätsnachweis zum Anfragen des Kommunikationsschlüssels unter Verwendung des zweiten Zertifikats aufweist.

7. Verfahren zur Kommunikationsschlüsselkonfiguration, das von einem ersten Endgerät eines Fahrzeugs zum Verschlüsseln von von dem ersten Endgerät des Fahrzeugs gesammelten Daten zum Hochladen der Daten auf einen Cloud-Server, wobei das Verfahren Folgendes umfasst:
• Senden (S301) einer ersten Nachricht an einen Zertifikats- und Schlüsselverwaltungsserver, wobei die erste Nachricht ein erstes Zertifikat des ersten Endgeräts und ein zweites Zertifikat des ersten Endgeräts umfasst, wobei das erste Zertifikat verwendet wird, um zu verifizieren, dass das erste Endgerät einen Identitätsnachweis zum Anfragen eines Kommunikationsschlüssels unter Verwendung des zweiten Zertifikats aufweist;
• Empfangen (S305) einer zweiten Nachricht von dem Zertifikats- und Schlüsselverwaltungsserver, wobei die zweite Nachricht einen Chiffretext des Kommunikationsschlüssels umfasst, wobei der Kommunikationsschlüssel zum Verschlüsseln der von dem ersten Endgerät gesammelten Daten zum Hochladen der Daten auf den Cloud-Server verwendet wird, wobei der Chiffretext des Kommunikationsschlüssels ein Chiffretext ist, der erlangt wird, nachdem der Kommunikationsschlüssel des ersten Endgeräts unter Verwendung des zweiten Zertifikats verschlüsselt wurde; und
• Entschlüsseln des Chiffretextes des Kommunikationsschlüssels unter Verwendung eines zweiten privaten Schlüssels, der dem zweiten Zertifikat entspricht, um den Kommunikationsschlüssel zu erlangen.

8. Verfahren nach Anspruch 7, wobei die zweite Nachricht mit einem Ergebnis des Verifizierens assoziiert ist, dass das erste Endgerät den Identitätsnachweis zum Anfragen des Kommunikationsschlüssels unter Verwendung des zweiten Zertifikats aufweist.

9. Verfahren nach Anspruch 7 oder 8, wobei die erste Nachricht ferner eine erste Signatur umfasst; und
das Verfahren vor dem Senden (S301) der ersten Nachricht an den Zertifikats- und Schlüsselverwaltungsserver ferner Folgendes umfasst:
Erzeugen der ersten Signatur basierend auf dem ersten Zertifikat, dem zweiten Zertifikat und einem ersten privaten Schlüssel, der dem ersten Zertifikat entspricht, wobei die erste Signatur verwendet wird, um zu verifizieren, dass das erste Endgerät den Identitätsnachweis zum Anfragen des Kommunikationsschlüssels unter Verwendung des zweiten Zertifikats aufweist.

10. Verfahren nach einem der Ansprüche 7 bis 9, wobei die zweite Nachricht ferner eine zweite Signatur umfasst; und
das Verfahren nach dem Empfangen (S305) der zweiten Nachricht ferner Folgendes umfasst:
Verifizieren der zweiten Signatur unter Verwendung eines öffentlichen Schlüssels in einem Zertifikat des Zertifikats- und Schlüsselverwaltungsservers; und
wenn die Verifizierung der zweiten Signatur erfolgreich ist, Bestimmen, dass die zweite Nachricht von dem Zertifikats- und Schlüsselverwaltungsserver ist.

11. Verfahren nach einem der Ansprüche 7 bis 9, wobei das Verfahren vor dem Senden (S301) der ersten Nachricht an den Zertifikats- und Schlüsselverwaltungsserver ferner Folgendes umfasst:
Anfordern des zweiten Zertifikats von dem Zertifikats- und Schlüsselverwaltungsserver.

12. Verfahren nach Anspruch 11, wobei das Anfordern des zweiten Zertifikats von dem Zertifikats- und Schlüsselverwaltungsserver Folgendes umfasst:
Senden (S701) einer dritten Nachricht an den Zertifikat- und Schlüsselverwaltungsserver, wobei die dritte Nachricht das erste Zertifikat und einen zweiten öffentlichen Schlüssel umfasst; und
Empfangen (S705) einer vierten Nachricht von dem Zertifikats- und Schlüsselverwaltungsserver, wobei die vierte Nachricht das zweite Zertifikat umfasst, das unter Verwendung des zweiten öffentlichen Schlüssels erzeugt wurde.

13. Verfahren nach Anspruch 12, wobei die dritte Nachricht ferner eine dritte Signatur umfasst; und
das Verfahren vor dem Senden (S701) der dritten Nachricht an den Zertifikats- und Schlüsselverwaltungsserver ferner Folgendes umfasst:
Erzeugen der dritten Signatur basierend auf dem zweiten öffentlichen Schlüssel und dem ersten privaten Schlüssel, der dem ersten Zertifikat entspricht, wobei die dritte Signatur verwendet wird, um zu verifizieren, dass das erste Endgerät den Identitätsnachweis zum Anfragen des Kommunikationsschlüssels unter Verwendung des zweiten Zertifikats aufweist.

14. Vorrichtung zur Kommunikationsschlüsselkonfiguration (800, 900), wobei die Vorrichtung konfiguriert ist, um das Verfahren nach einem der Ansprüche 1 bis 6 oder einem der Ansprüche 7 bis 13 durchzuführen.

15. Computerlesbares Speichermedium, wobei das computerlesbare Speichermedium ein Computerprogramm speichert, und wenn das Computerprogramm auf einem oder mehreren Prozessoren ausgeführt wird, der eine oder die mehreren Prozessoren veranlasst werden, das Verfahren nach einem der Ansprüche 1 bis 6 durchzuführen oder das Verfahren nach einem der Ansprüche 7 bis 13 implementiert wird.

## Revendications

1. Procédé de configuration de clé de communication réalisé par un serveur de gestion de certificats et de clés, le procédé comprenant les étapes suivantes :
• la réception (S302) d'un premier message à partir d'un premier terminal d'un véhicule, dans lequel le premier message comprend un premier certificat du premier terminal et un second certificat du premier terminal ;
• la vérification (S303), en utilisant le premier certificat, que le premier terminal a une information d'identité permettant de demander une clé de communication en utilisant le second certificat ;
• le chiffrement (S304), en utilisant le second certificat, de la clé de communication attribuée au premier terminal pour chiffrer les données collectées par le premier terminal pour télécharger les données sur un serveur cloud, pour obtenir un texte chiffré de la clé de communication ; et
• l'envoi (S305) d'un deuxième message au premier terminal, dans lequel le deuxième message comprend le texte chiffré de la clé de communication.

2. Procédé selon la revendication 1, dans lequel le premier message comprend également une première signature ; et
la vérification (S303), en utilisant le premier certificat, que le premier terminal a l'information d'identité permettant de demander la clé de communication en utilisant le second certificat comprend :
∘ la vérification de la première signature sur la base du premier message et d'une première clé publique dans le premier certificat ; et
∘ lorsque la vérification de la première signature réussit, la détermination que le premier terminal a une première clé privée correspondant au premier certificat, dans lequel la première clé privée est utilisée pour indiquer que le premier terminal a l'information d'identité permettant de demander la clé de communication en utilisant le second certificat.

3. Procédé selon la revendication 1 ou 2, dans lequel le deuxième message comprend également une deuxième signature ; et
avant l'envoi (S305) du deuxième message au premier terminal, le procédé comprend également :
∘ la génération de la deuxième signature sur la base du texte chiffré de la clé de communication et d'une clé privée correspondant à un certificat du serveur de gestion de certificats et de clés, dans lequel la deuxième signature est utilisée pour indiquer que le deuxième message provient du serveur de gestion de certificats et de clés.

4. Procédé selon l'une quelconque des revendications 1 à 3, dans lequel, avant la réception (S302) du premier message à partir du premier terminal, le procédé comprend également :
∘ l'envoi (S705) d'un quatrième message au premier terminal, dans lequel le quatrième message comprend le second certificat.

5. Procédé selon la revendication 4, dans lequel avant l'envoi du quatrième message au premier terminal, le procédé comprend également :
∘ la réception (S702) d'un troisième message à partir du premier terminal, dans lequel le troisième message comprend le premier certificat et une seconde clé publique ;
∘ la vérification (S703), en utilisant le premier certificat, que le premier terminal a une information d'identité permettant de demander une clé de communication en utilisant le second certificat ; et
∘ la génération (S704) du second certificat en utilisant la seconde clé publique.

6. Procédé selon la revendication 5, dans lequel le troisième message comprend également une troisième signature ; et
la vérification (S703), en utilisant le premier certificat, que le premier terminal a l'information d'identité permettant de demander la clé de communication en utilisant le second certificat comprend :
∘ la vérification de la troisième signature sur la base de la seconde clé publique et de la première clé publique dans le premier certificat ; et
∘ lorsque la vérification sur la troisième signature réussit, la détermination que le premier terminal a la première clé privée correspondant au premier certificat, dans lequel la première clé privée est utilisée pour indiquer que le premier terminal a l'information d'identité permettant de demander la clé de communication en utilisant le second certificat.

7. Procédé de configuration de clé de communication réalisé par un premier terminal d'un véhicule pour chiffrer des données collectées par le premier terminal du véhicule pour télécharger les données sur un serveur cloud, le procédé comprenant :
● l'envoi (S301) d'un premier message à un serveur de gestion de certificats et de clés, dans lequel le premier message comprend un premier certificat du premier terminal et un second certificat du premier terminal, dans lequel le premier certificat est utilisé pour vérifier que le premier terminal a une information d'identité permettant de demander une clé de communication en utilisant le second certificat ;
● la réception (S305) d'un deuxième message à partir du serveur de gestion de certificats et de clés, dans lequel le deuxième message comprend un texte chiffré de la clé de communication, dans lequel la clé de communication est utilisée pour chiffrer les données collectées par le premier terminal pour télécharger les données sur le serveur cloud, dans lequel le texte chiffré de la clé de communication est un texte chiffré obtenu après que la clé de communication du premier terminal est chiffrée en utilisant le second certificat ; et
● le déchiffrage du texte chiffré de la clé de communication en utilisant une seconde clé privée correspondant au second certificat, pour obtenir la clé de communication.

8. Procédé selon la revendication 7, dans lequel le deuxième message est associé à un résultat de la vérification selon laquelle le premier terminal a l'information d'identité permettant de demander la clé de communication en utilisant le second certificat.

9. Procédé selon la revendication 7 ou 8, dans lequel le premier message comprend également une première signature ; et
avant l'envoi (S301) du premier message au serveur de gestion de certificats et de clés, le procédé comprend également :
∘ la génération de la première signature sur la base du premier certificat, du second certificat, et d'une première clé privée correspondant au premier certificat, dans lequel la première signature est utilisée pour vérifier que le premier terminal a l'information d'identité permettant de demander la clé de communication à l'aide du second certificat.

10. Procédé selon l'une quelconque des revendications 7 à 9, dans lequel le deuxième message comprend également une deuxième signature ; et
après la réception (S305) du deuxième message, le procédé comprend également :
∘ la vérification de la deuxième signature en utilisant une clé publique dans un certificat du serveur de gestion de certificats et de clés ; et
∘ lorsque la vérification de la deuxième signature réussit, la détermination que le deuxième message provient du serveur de gestion de certificats et de clés.

11. Procédé selon l'une quelconque des revendications 7 à 9, dans lequel, avant l'envoi (S301) du premier message au serveur de gestion de certificats et de clés, le procédé comprend également :
o la demande du second certificat à partir du serveur de gestion de certificats et de clés.

12. Procédé selon la revendication 11, dans lequel la demande du second certificat à partir du serveur de gestion de certificats et de clés comprend :
∘ l'envoi (S701) d'un troisième message au serveur de gestion de certificats et de clés, dans lequel le troisième message comprend le premier certificat et une seconde clé publique ; et
∘ la réception (S705) d'un quatrième message à partir du serveur de gestion de certificats et de clés, dans lequel le quatrième message comprend le second certificat généré en utilisant la seconde clé publique.

13. Procédé selon la revendication 12, dans lequel le troisième message comprend également une troisième signature ; et
avant l'envoi (S701) du troisième message au serveur de gestion de certificats et de clés, le procédé comprend également :
∘ la génération de la troisième signature sur la base de la seconde clé publique et de la première clé privée correspondant au premier certificat, dans lequel la troisième signature est utilisée pour vérifier que le premier terminal a l'information d'identité permettant de demander la clé de communication en utilisant le second certificat.

14. Appareil de configuration de clé de communication (800, 900), dans lequel l'appareil est configuré pour réaliser le procédé selon l'une quelconque des revendications 1 à 6, ou l'une quelconque des revendications 7 à 13.

15. Support de stockage lisible par ordinateur, dans lequel le support de stockage lisible par ordinateur stocke un programme informatique, et lorsque le programme informatique est exécuté sur un ou plusieurs processeurs, les un ou plusieurs processeurs sont amenés à réaliser le procédé selon l'une quelconque des revendications 1 à 6 ou le procédé selon l'une quelconque des revendications 7 à 13 est mis en œuvre.
